# EUROPEAN PATENT APPLICATION

(11) **EP 4 568 336 A1**
(43) Date of publication of application: **11.06.2025**
(21) Application number: 23849979.2
(22) Date of filing: 26.07.2023
(51) Int. Cl.: H04W 24/10, H04W 16/26, H04W 16/28, H04W 72/21, H04W 72/23

(54) **COMMUNICATION SYSTEM**

(30) Priority: 02.08.2022 JP 2022123325
(71) Applicant: MITSUBISHI ELECTRIC CORPORATION, Chiyoda-ku Tokyo 100-8310 (JP)
(72) Inventor: SHIMODA, Tadahiro, Tokyo 100-8310 (JP); MOCHIZUKI, Mitsuru, Tokyo 100-8310 (JP); IWAYAMA, Naofumi, Tokyo 100-8310 (JP)
(74) Representative: Mewburn Ellis LLP
(86) International application number: PCT/JP2023/027385
(87) International publication number: WO 2024/029424

(57) **Abstract**

A communication system includes a base station applied to a fifth generation radio access system, and a repeater having a beamforming function and being configured to perform relay processing between the base station and a communication terminal, the base station being configured to transmit information on a beam to be used in the relay processing and transmit a reference signal to be used for measurement for mobility control of the communication terminal to the repeater, and the repeater being configured to, after receiving the reference signal, form the beam based on the information on the beam received from the base station and transmit the reference signal to the communication terminal, receive measurement results of the reference signal from the communication terminal, and relay the measurement results to the base station.

## Description

### Technical Field

The present disclosure relates to a radio communication technology.

### Background

In the 3rd Generation Partnership Project (3GPP) being a standard organization of mobile communication systems, a fifth generation (which may be hereinafter referred to as "5G") radio access system is studied (for example, NPL 2) as a successor to Long Term Evolution (LTE) and Long Term Evolution Advanced (LTE-A) being one of fourth generation radio access systems (see NPL 1). A technology of 5G radio sections is referred to as "New Radio Access Technology" ("New Radio" is abbreviated to "NR"). An NR system has been studied, based on an LTE system and the LTE-A system.

For example, in Europe, requirements for 5G are summarized in an organization named METIS (see NPL 3). The 5G radio access system is required to implement lower power consumption and lower apparatus costs, making its system capacity 1000 times as high as, data transmission rate 100 times as high as, data processing delay one fifth (1/5) of, and number of simultaneously connected communication terminals 100 times as large as those of the LTE system (see NPL 3).

To satisfy these requirements, in 3GPP, standardization of 5G has been studied (see NPLs 4 to 23).

As NR access schemes, orthogonal frequency division multiplexing (OFDM) is used in a downlink direction, and OFDM and discrete Fourier transform-spread-OFDM (DFT-s-OFDM) are used in an uplink direction. As with LTE and LTE-A, the 5G system employs only a packet communication method, without including circuit switching.

In NR, frequencies higher than those in LTE are available in order to enhance the transmission rate and reduce the processing delay.

In NR in which frequencies higher than those in LTE may be used, cell coverage is secured by forming a narrow beam-like transmission and reception range (beamforming) and changing directions of beams (beam sweeping).

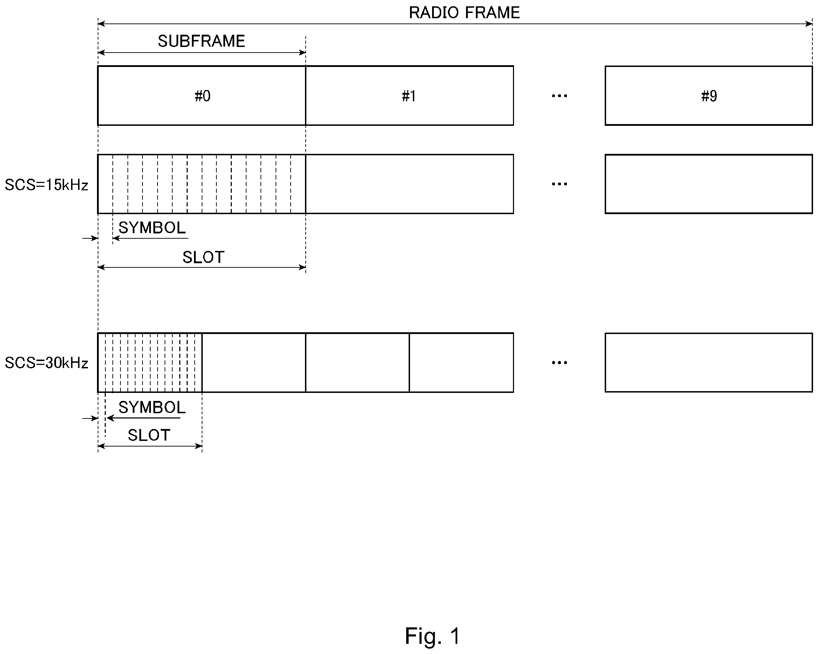

Decisions on a frame configuration in the NR system in 3GPP described in NPL 1 (Section 5) will be described with reference to Fig. 1. Fig. 1 is an explanatory diagram illustrating a configuration of radio frames used in an NR communication system. In Fig. 1, one radio frame has 10 ms. The radio frame is divided into 10 subframes having equal sizes. The frame configuration in NR supports one or a plurality of numerologies, in other words, one or a plurality of subcarrier spacings (SCSs). In NR, one subframe includes 1 ms and one slot includes 14 symbols, regardless of the subcarrier spacing. The number of slots included in one subframe is one with the subcarrier spacing of 15 kHz, and the number of slots with other subcarrier spacings increases in proportion to the subcarrier spacing (see NPL 11 (3GPP TS 38.211)).

Decisions on a channel configuration in the NR system in 3GPP are described in NPL 2 (Section 5) and NPL 11.

A physical broadcast channel (PBCH) is a downlink transmission channel from a base station apparatus (which may be hereinafter simply referred to as a "base station") to a communication terminal apparatus (which may be hereinafter referred to as a "communication terminal" or a "terminal") such as a mobile terminal apparatus (which may be hereinafter simply referred to as a "mobile terminal"). The PBCH is transmitted together with a downlink synchronization signal.

The downlink synchronization signal in NR includes a primary synchronization signal (P-SS) and a secondary synchronization signal (S-SS). The synchronization signal is transmitted as a synchronization signal burst (which may be hereinafter referred to as an SS burst) from the base station with a predetermined period for predetermined duration. The SS burst includes a synchronization signal block (which may be hereinafter referred to as an SS block) of each beam of the base station.

The base station transmits, by changing the beams, the SS block of each beam within the duration of the SS burst. The SS block includes the P-SS, the S-SS, and the PBCH.

A physical downlink control channel (PDCCH) is a downlink transmission channel from the base station to the communication terminal. The PDCCH carries downlink control information (DCI). The DCI includes resource allocation information of a downlink shared channel (DL-SCH) being one of transport channels to be described below, resource allocation information of a paging channel (PCH) being one of transport channels to be described below, hybrid automatic repeat request (HARQ) information on the DL-SCH, and the like. The DCI may include an uplink scheduling grant. The DCI may include an acknowledgement (Ack)/negative acknowledgement (Nack) being a response signal for uplink transmission. For flexible switching of DL/UL in the slot, the DCI may include a slot format indication (SFI). The PDCCH or the DCI is also referred to as an L1/L2 control signal.

In NR, a time/frequency domain as candidates including the PDCCH is provided. The domain is referred to as a control resource set (CORESET). The communication terminal monitors the CORESET and acquires the PDCCH.

A physical downlink shared channel (PDSCH) is a downlink transmission channel from the base station to the communication terminal. To the PDSCH, a downlink shared channel (DL-SCH) being a transport channel and a PCH being a transport channel are mapped.

A physical uplink control channel (PUCCH) is an uplink transmission channel from the communication terminal to the base station. The PUCCH carries uplink control information (UCI). The UCI includes an Ack/Nack being a response signal for downlink transmission, channel state information (CSI), a scheduling request (SR), and the like. The CSI includes a rank indicator (RI), a precoding matrix indicator (PMI), and a channel quality indicator (CQI) report. The RI is rank information of a channel matrix in Multiple Input Multiple Output (MIMO). The PMI is information of a precoding weight matrix used in MIMO. The CQI is quality information indicating received data quality or communication path quality. The UCI may be carried on a PUSCH to be described below. The PUCCH or the UCI is also referred to as an L1/L2 control signal.

A physical uplink shared channel (PUSCH) is an uplink transmission channel from the communication terminal to the base station. To the PUSCH, an uplink shared channel (UL-SCH) being one of transport channels is mapped.

A physical random access channel (PRACH) is an uplink transmission channel from the communication terminal to the base station. The PRACH carries a random access preamble.

A downlink reference signal (RS) is known symbols in the NR communication system. The following four types of downlink reference signals are defined. They are a data demodulation reference signal (DM-RS) being a UE-specific reference signal, a phase tracking reference signal (PT-RS), a positioning reference signal (PRS), and a channel state information reference signal (CSI-RS). Measurement of a physical layer of the communication terminal includes reference signal received power (RSRP) measurement and reference signal received quality (RSRQ) measurement.

An uplink reference signal is also similarly known symbols in the NR communication system. The following three types of uplink reference signals are defined. They are a data demodulation reference signal (DM-RS), a phase tracking reference signal (PT-RS), and a sounding reference signal (SRS).

Transport channels described in NPL 2 (Section 5) will be described. A broadcast channel (BCH), among downlink transport channels, is broadcast to the entire coverage of the base station (cell). The BCH is mapped to the physical broadcast channel (PBCH).

HARQ retransmission control is applied to the downlink shared channel (DL-SCH). The DL-SCH can be broadcast to the entire coverage of the base station (cell). The DL-SCH supports dynamic or semi-static resource allocation. The semi-static resource allocation is also referred to as semi-persistent scheduling. The DL-SCH supports discontinuous reception (DRX) of the communication terminal in order to implement low power consumption of the communication terminal. The DL-SCH is mapped to the physical downlink shared channel (PDSCH).

The paging channel (PCH) supports DRX of the communication terminal in order to enable low power consumption of the communication terminal. The PCH is required to be broadcast to the entire coverage of the base station (cell). The PCH is mapped to physical resources that can be dynamically used for traffic, such as the physical downlink shared channel (PDSCH).

HARQ retransmission control is applied to the uplink shared channel (UL-SCH) among uplink transport channels. The UL-SCH supports dynamic or semi-static resource allocation. The semi-static resource allocation is also referred to as a configured grant. The UL-SCH is mapped to the physical uplink shared channel (PUSCH).

A random access channel (RACH) is limited to control information. The RACH has a risk of collision. The RACH is mapped to the physical random access channel (PRACH).

HARQ will be described. HARQ is a technology for enhancing communication quality of a transmission path, using a combination of an automatic repeat request (ARQ) and error correction (forward error correction). HARQ has an advantage in that, owing to retransmission, error correction effectively functions even for a transmission path with varying communication quality. Particularly, in retransmission, it is also possible to further enhance quality by combining reception results of first transmission and reception results of retransmission.

An example of a method of retransmission will be described. In a case in which a receiver fails to correctly decode received data, in other words, a cyclic redundancy check (CRC) error occurs in the receiver (CRC = NG), a "Nack" is transmitted from the receiver to a transmitter. The transmitter that has received the "Nack" retransmits data. In a case in which the receiver successfully correctly decodes received data, in other words, a CRC error does not occur in the receiver (CRC = OK), an "Ack" is transmitted from the receiver to the transmitter. The transmitter that has received the "Ack" transmits subsequent data.

Another example of a method of retransmission will be described. In a case in which a CRC error occurs in the receiver, a retransmission request is performed from the receiver to the transmitter. The retransmission request is performed using toggling of a new data indicator (NDI). The transmitter that has received the retransmission request retransmits data. In a case in which a CRC error does not occur in the receiver, the retransmission request is not performed. In a case in which the transmitter does not receive the retransmission request for a predetermined time, the transmitter considers that no CRC error has occurred in the receiver.

Logical channels described in NPL 1 (Section 6) will be described. A broadcast control channel (BCCH) is a downlink channel for broadcasting system control information. The BCCH being a logical channel is mapped to the broadcast channel (BCH) or the downlink shared channel (DL-SCH) being transport channels.

A paging control channel (PCCH) is a downlink channel for transmitting paging information and system information change. The PCCH being a logical channel is mapped to the paging channel (PCH) being a transport channel.

A common control channel (CCCH) is a channel for transmitting control information between the communication terminal and the base station. The CCCH is used in a case in which the communication terminal does not have RRC connection with the network. In the downlink direction, the CCCH is mapped to the downlink shared channel (DL-SCH) being a transport channel. In the uplink direction, the CCCH is mapped to the uplink shared channel (UL-SCH) being a transport channel.

A dedicated control channel (DCCH) is a channel for transmitting dedicated control information between the communication terminal and the network on a one-to-one basis. The DCCH is used in a case in which the communication terminal has RRC connection with the network. The DCCH is mapped to the uplink shared channel (UL-SCH) in the uplink, and is mapped to the downlink shared channel (DL-SCH) in the downlink.

A dedicated traffic channel (DTCH) is a channel for one-to-one communication to the communication terminal for transmission of user information. The DTCH is present in both of the uplink and the downlink. The DTCH is mapped to the uplink shared channel (UL-SCH) in the uplink, and is mapped to the downlink shared channel (DL-SCH) in the downlink.

Location tracking of the communication terminal is performed in a unit of an area consisting of one or more cells. Location tracking is performed to enable tracking the location of the communication terminal even in an idle state, and enable calling the communication terminal, in other words, enable the communication terminal to receive a call. The area for location tracking of the communication terminal is referred to as a tracking area (TA).

NR supports calling the communication terminal in a range in a unit of an area smaller than the tracking area. The range is referred to as a RAN notification area (RNA). Paging of the communication terminal in an RRC_INACTIVE state to be described below is performed in the range.

In NR, carrier aggregation (CA) is studied, in which two or more component carriers (CCs) are aggregated to support wide frequency bandwidths (transmission bandwidths). CA is described in NPL 1.

In a case in which CA is configured, the UE being a communication terminal has a single RRC connection with the network (NW). In RRC connection, one serving cell provides NAS mobility information and security input. The cell is referred to as a primary cell (PCell). A secondary cell (SCell) is configured to form a group of serving cells with the PCell, according to a UE capability. The group of serving cells consisting of one PCell and one or more SCells is configured for one UE.

3GPP has dual connectivity (abbreviated to DC) or the like in which the UE connects to two base stations and perform communication, in order to further increase communication capacity. DC is described in NPLs 1 and 22.

One of the base stations performing dual connectivity (DC) may be referred to as a "master base station (master node (MN))", and the other may be referred to as a "secondary base station (secondary node (SN))". The serving cells configured by the master base station may be collectively referred to as a master cell group (MCG), and the serving cells configured by the secondary base station may be collectively referred to as a secondary cell group (SCG). In DC, a primary cell in the MCG or the SCG is referred to as a special cell (SpCell or SPCell). The special cell in the MCG is referred to as a PCell, and the special cell in the SCG is referred to as a primary SCG cell (PSCell).

In NR, the base station configures a part of the carrier frequency band (the part may be hereinafter referred to as a bandwidth part (BWP)) for the UE in advance, and the UE performs transmission and reception to and from the base station in the BWP, to thereby reduce power consumption in the UE.

In 3GPP, support of services (which may be applications) using sidelink (SL) communication (also referred to as PC5 communication) both in an Evolved Packet System (EPS) and a 5G core system to be described below is studied (see NPLs 1, 2, and 26 to 28). In SL communication, communication is performed between the terminals. Examples of the services using SL communication include a vehicle-to-everything (V2X) service, a proximity-based service, and the like. The SL communication proposes not only direct communication between the terminals but also communication between the UE and the NW via relay (see NPLs 26 and 28).

Physical channels used in the SL (see NPLs 2 and 11) will be described. A physical sidelink broadcast channel (PSBCH) carries information on a system and synchronization, and is transmitted from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

A physical sidelink feedback channel (PSFCH) carries sidelink HARQ feedback from the UE that has received PSSCH transmission to the UE that has transmitted the PSSCH.

Transport channels used in the SL (see NPL 1) will be described. A sidelink broadcast channel (SL-BCH) has a predetermined transport format, and is mapped to the PSBCH being a physical channel.

A sidelink shared channel (SL-SCH) supports broadcast transmission. The SL-SCH supports both of UE autonomous resource selection and resource allocation scheduled by the base station. UE autonomous resource selection has a risk of collision, and in a case in which dedicated resources are allocated to the UE by the base station, there is no collision. The SL-SCH supports dynamic link adaptation by changing transmit power, modulation, and coding. The SL-SCH is mapped to the PSSCH being a physical channel.

Logical channels used in the SL (see NPL 2) will be described. A sidelink broadcast control channel (SBCCH) is a sidelink channel for broadcasting sidelink system information from one UE to another UE. The SBCCH is mapped to the SL-BCH being a transport channel.

A sidelink traffic channel (STCH) is a one-to-many sidelink traffic channel for transmitting user information from one UE to another UE. The STCH is used only by the UE having a sidelink communication capability and the UE having a V2X sidelink communication capability. One-to-one communication between the UEs having two sidelink communication capabilities is also implemented on the STCH. The STCH is mapped to the SL-SCH being a transport channel.

A sidelink control channel (SCCH) is a sidelink control channel for transmitting control information from one UE to another UE. The SCCH is mapped to the SL-SCH being a transport channel.

In LTE, only broadcast is supported in the SL communication. In NR, support of unicast and groupcast in addition to broadcast in the SL communication is studied (see NPL 27 (3GPP TS 23.287)).

In SL unicast communication and groupcast communication, HARQ feedback (Ack/Nack), a CSI report, and the like are supported.

In 3GPP, an integrated access and backhaul (IAB) is studied, in which both of an access link being a link between the UE and the base station and a backhaul link being a link between the base stations are performed wirelessly (see NPLs 2, 20, and 29).

In 3GPP, some new technologies are proposed. For example, introduction of a smart repeater (a repeater capable of beam control) is proposed (NPL 30). A method of controlling the smart repeater from a base station is studied.

### Citation List

### Non Patent Literature

[NPL 1] 3GPP TS 36.300 V16.7.0
[NPL 2] 3GPP TS 38.300 V16.8.0
[NPL 3] "Scenarios, requirements and KPIs for 5G mobile and wireless system", ICT-317669-METIS/D1.1
[NPL 4] 3GPP TR 23.799 V14.0.0
[NPL 5] 3GPP TR 38.801 V14.0.0
[NPL 6] 3GPP TR 38.802 V14.2.0
[NPL 7] 3GPP TR 38.804 V14.0.0
[NPL 8] 3GPP TR 38.912 V16.0.0
[NPL 9] 3GPP RP-172115
[NPL 10] 3GPP TS 23.501 V17.3.0
[NPL 11] 3GPP TS 38.211 V17.0.0
[NPL 12] 3GPP TS 38.212 V17.0.0
[NPL 13] 3GPP TS 38.213 V17.0.0
[NPL 14] 3GPP TS 38.214 V17.0.0
[NPL 15] 3GPP TS 38.321 V16.7.0
[NPL 16] 3GPP TS 38.322 V16.2.0
[NPL 17] 3GPP TS 38.323 V16.6.0
[NPL 18] 3GPP TS 37.324 V16.3.0
[NPL 19] 3GPP TS 38.331 V16.7.0
[NPL 20] 3GPP TS 38.401 V16.8.0
[NPL 21] 3GPP TS 38.413 V16.8.0
[NPL 22] 3GPP TS 37.340 V16.8.0
[NPL 23] 3GPP TS 38.423 V16.8.0
[NPL 24] 3GPP TS 38.305 V16.7.0
[NPL 25] 3GPP TS 23.273 V17.3.0
[NPL 26] 3GPP TR 23.703 V12.0.0
[NPL 27] 3GPP TS 23.287 V17.2.0
[NPL 28] 3GPP TS 23.303 V17.0.0
[NPL 29] 3GPP TS 38.340 V16.5.0
[NPL 30] 3GPP RP-213700
[NPL 31] 3GPP RP-201831
[NPL 32] 3GPP TS 38.215 V17.1.0
[NPL 33] 3GPP TS 38.455 V17.0.0
[NPL 34] 3GPP TS 37.355 V17.0.0

### SUMMARY

### Technical Problem

In the 5G radio access system, communication for various services is performed. In order to enable such communication, for example, support of communication using a smart repeater is also studied. Mobility of the UE to connect to the base station via the smart repeater is also studied. However, while the mobility requires measurement (received quality measurement), targets and procedures of measurement are not disclosed in a case in which the UE connects to the base station via the smart repeater. This causes a problem that the UE cannot perform measurement and the base station cannot control beams of the smart repeater, making the UE unable to connect to the base station via the smart repeater.

In view of the problem, the present disclosure has one object to enable mobility of a UE to connect to a base station via a smart repeater and implement a high-reliability communication system.

### Solution to Problem

A communication system includes a base station applied to a fifth generation radio access system, and a repeater having a beamforming function and being configured to perform relay processing between the base station and a communication terminal. The base station is configured to transmit information on a beam to be used in the relay processing and transmit a reference signal to be used for measurement for mobility control of the communication terminal to the repeater. The repeater is configured to, after receiving the reference signal, form the beam based on the information on the beam received from the base station and transmit the reference signal to the communication terminal, and after receiving measurement results of the reference signal from the communication terminal, relay the measurement results to the base station.

### Advantageous Effects of Invention

According to the present disclosure, mobility of the UE to connect to the base station via the smart repeater can be enabled, and a high-reliability communication system can be implemented.

The objects, features, aspects and advantages of the present disclosure will become more apparent from the following detailed description and the accompanying drawings. Note that, in the following description, a smart repeater is simply referred to as a "repeater".

### BRIEF DESCRIPTION OF THE DRAWINGS

Fig. 1 is an explanatory diagram illustrating a configuration of radio frames used in an NR communication system;
Fig. 2 is a block diagram illustrating an overall configuration of an NR communication system 210 discussed in 3GPP;
Fig. 3 is a configuration diagram of DC performed by base stations to connect to an NG core;
Fig. 4 is a block diagram illustrating a configuration of a mobile terminal 202 illustrated in Fig. 2;
Fig. 5 is a block diagram illustrating a configuration of a base station 213 illustrated in Fig. 2;
Fig. 6 is a block diagram illustrating a configuration of a 5GC unit;
Fig. 7 is a flowchart illustrating an outline from cell search to idle operation performed by a communication terminal (UE) in an NR communication system;
Fig. 8 is a diagram illustrating an example of a configuration of a cell in an NR system;
Fig. 9 is a connection configuration diagram illustrating an example of a connection configuration of terminals in SL communication;
Fig. 10 is a connection configuration diagram illustrating an example of a connection configuration of base stations supporting an integrated access and backhaul;
Fig. 11 is a diagram illustrating a measurement signal transmitted from the base station according to a first embodiment;
Fig. 12 is a diagram illustrating an example of an operation sequence of L1 measurement in the UE to connect to the base station via a repeater according to the first embodiment;
Fig. 13 is a diagram illustrating an example of an operation sequence of L3 measurement in the UE to connect to the base station via the repeater according to the first embodiment;
Fig. 14 is a diagram illustrating another example of an operation sequence of L1 measurement in the repeater according to the first embodiment;
Fig. 15 is a diagram illustrating another example of an operation sequence of L1 measurement in the repeater according to the first embodiment;
Fig. 16 is a diagram illustrating another example of an operation sequence of L3 measurement in the repeater according to the first embodiment;
Fig. 17 is a diagram illustrating a measurement signal transmitted from the repeater according to the first embodiment;
Fig. 18 is a diagram illustrating an example of an operation sequence of L1 measurement in the UE to connect to the base station via the repeater according to the first embodiment;
Fig. 19 is a diagram illustrating an example of an operation sequence of L3 measurement in the UE to connect to the base station via the repeater according to the first embodiment;
Fig. 20 is a diagram illustrating an example of an operation sequence in which the UE to connect to the base station via the repeater transmits an SRS and the base station receives the SRS according to a second embodiment;
Fig. 21 is a diagram illustrating an example of an operation sequence in which the UE to connect to the base station via the repeater transmits an SRS and the repeater receives the SRS according to the second embodiment; and
Fig. 22 is a diagram illustrating an example of an operation sequence in which the repeater transmits an SRS and the base station receives the SRS according to the second embodiment.

### DETAILED DESCRIPTION

### First Embodiment

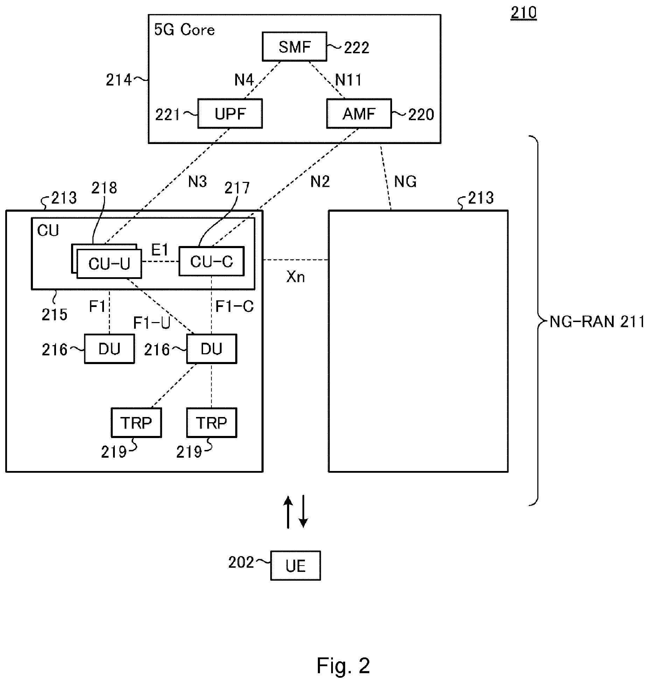

Fig. 2 is a block diagram illustrating an overall configuration of an NR communication system 210 discussed in 3GPP. Fig. 2 will be described. A radio access network is referred to as a next generation radio access network (NG-RAN) 211. A mobile terminal apparatus (hereinafter referred to as a "mobile terminal (user equipment (UE))") 202 being a communication terminal apparatus is capable of radio communication with a base station apparatus (hereinafter referred to as an "NR base station (NG-RAN Node B (gNB))") 213, and transmits and receives signals in radio communication. The NG-RAN 211 includes one or a plurality of NR base stations 213.

Here, the "communication terminal apparatus" includes not only the mobile terminal apparatus such as a mobile cellular phone terminal apparatus, but also includes an immobile device such as a sensor. In the following description, the "communication terminal apparatus" may be simply referred to as a "communication terminal".

A protocol of Access Stratum (AS) is terminated between the UE 202 and the NG-RAN 211. As the protocol of AS, for example, Radio Resource Control (RRC), Service Data Adaptation Protocol (SDAP), Packet Data Convergence Protocol (PDCP), Radio Link Control (RLC), Medium Access Control (MAC), and Physical layer (PHY) are used. The RRC is used in a control plane (which may be hereinafter also referred to as a C plane or a C-Plane), the SDAP is used in a user plane (which may be hereinafter also referred to as a U plane or a U-Plane), and the PDCP, the MAC, the RLC, and the PHY are used in both of the C plane and the U plane.

The control protocol Radio Resource Control (RRC) between the UE 202 and the NR base station 213 performs broadcast, paging, RRC connection management, and the like. States between the NR base station 213 and the UE 202 in RRC include RRC_IDLE, RRC_CONNECTED, and RRC_INACTIVE.

In RRC_IDLE, public land mobile network (PLMN) selection, system information (SI) broadcast, paging, cell re-selection, mobility, and the like are performed. In RRC_CONNECTED, the mobile terminal has RRC connection, and can transmit and receive data to and from a network. In RRC_CONNECTED, handover (HO), neighbor cell measurement, and the like are performed. In RRC _INACTIVE, connection between a 5G core unit 214 and the NR base station 213 is maintained, and system information (SI) broadcast, paging, cell re-selection, mobility, and the like are performed.

The gNB 213 is connected to the 5G core unit (which may be hereinafter referred to as a "5GC unit") 214 including an Access and Mobility Management Function (AMF), a Session Management Function (SMF), a User Plane Function (UPF), and the like via an NG interface. Control information and/or user data is communicated between the gNB 213 and the 5GC unit 214. The NG interface is a general term for an N2 interface between the gNB 213 and an AMF 220, an N3 interface between the gNB 213 and a UPF 221, an N11 interface between the AMF 220 and an SMF 222, and an N4 interface between the UPF 221 and the SMF 222. A plurality of 5GC units 214 may be connected to one gNB 213. The gNBs 213 are connected via an Xn interface, and control information and/or user data is communicated between the gNBs 213.

The 5GC unit 214 is an upper apparatus, or specifically an upper node, and performs control of connection between the NR base station 213 and the mobile terminal (UE) 202, distribution of paging signals to one or a plurality of NR base stations (gNBs) 213 and/or LTE base stations (E-UTRAN Node Bs (eNBs)), and the like. The 5GC unit 214 performs mobility control of an idle state. In a case in which the mobile terminal 202 is in an idle state, an inactive state, and an active state, the 5GC unit 214 manages a tracking area list. The 5GC unit 214 transmits a paging message to a cell belonging to a tracking area in which the mobile terminal 202 is registered, and thereby starts a paging protocol.

The gNB 213 may configure one or a plurality of cells. In a case in which one gNB 213 configures a plurality of cells, each cell is configured to be capable of communicating with the UE 202.

The gNB 213 may be divided into a central unit (which may be hereinafter referred to as a CU) 215 and a distributed unit (which may be hereinafter referred to as a DU) 216. One CU 215 is configured in the gNB 213. One or a plurality of DUs 216 are configured in the gNB 213. One DU 216 configures one or a plurality of cells. The CU 215 is connected to the DU 216 via an F1 interface, and control information and/or user data is communicated between the CU 215 and the DU 216. The F1 interface includes an F1-C interface and an F1-U interface. The CU 215 has a function of each protocol of the RRC, the SDAP, and the PDCP, and the DU 216 has a function of each protocol of the RLC, the MAC, and the PHY. One or a plurality of transmission reception points (TRPs) 219 may be connected to the DU 216. The TRP 219 transmits and receives radio signals to and from the UE.

The CU 215 may be divided into a C-plane CU (CU-C) 217 and a U-plane CU (CU-U) 218. One CU-C 217 is configured in the CU 215. One or a plurality of CU-Us 218 are configured in the CU 215. The CU-C 217 is connected to the CU-U 218 via an E1 interface, and control information is communicated between the CU-C 217 and the CU-U 218. The CU-C 217 is connected to the DU 216 via an F1-C interface, and control information is communicated between the CU-C 217 and the DU 216. The CU-U 218 is connected to the DU 216 via an F1-U interface, and user data is communicated between the CU-U 218 and the DU 216.

In the 5G communication system, a Unified Data Management (UDM) function and a Policy Control Function (PCF) described in NPL 10 (3GPP TS 23.501) may be included. The UDM and/or the PCF may be included in the 5GC unit 214 of Fig. 2.

In the 5G communication system, a Location Management Function (LMF) described in NPL 24 (3GPP TS 38.305) may be provided. As disclosed in NPL 25 (3GPP TS 23.273), the LMF may be connected to the base station via the AMF.

In the 5G communication system, a Non-3GPP Interworking Function (N3IWF) described in NPL 10 (3GPP TS 23.501) may be included. The N3IWF may terminate an access network (AN) between the N3IWF and the UE in non-3GPP access with the UE.

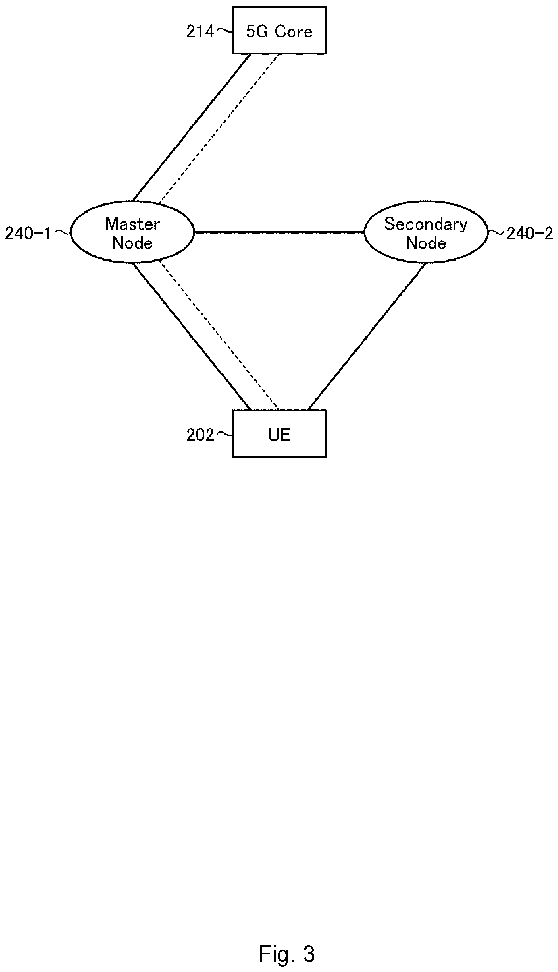

Fig. 3 is a diagram illustrating a configuration of dual connectivity (DC) to connect to an NG core. In Fig. 3, the solid line indicates connection of the U-Plane, and the broken line indicates connection of the C-Plane. In Fig. 3, a master base station 240-1 may be a gNB or an eNB. A secondary base station 240-2 may be a gNB or an eNB. For example, in Fig. 3, a DC configuration in which the master base station 240-1 is a gNB and the secondary base station 240-2 is an eNB may be referred to as NG-EN-DC. Although Fig. 3 illustrates an example in which U-Plane connection between the 5GC unit 214 and the secondary base station 240-2 is performed via the master base station 240-1, the U-Plane connection may be directly performed between the 5GC unit 214 and the secondary base station 240-2. In Fig. 3, in place of the 5GC unit 214, an Evolved Packet Core (EPC), which is a core network connected to the LTE system or the LTE-A system, may be connected to the master base station 240-1. U-Plane connection between the EPC and the secondary base station 240-2 may be directly performed.

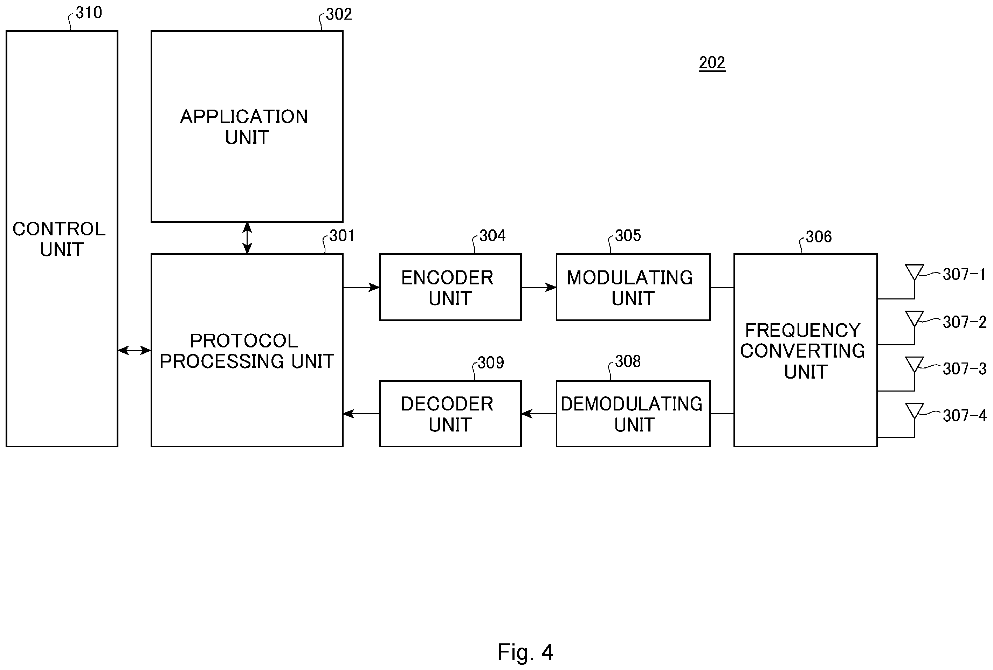

Fig. 4 is a block diagram illustrating a configuration of the mobile terminal 202 illustrated in Fig. 2. Transmission processing of the mobile terminal 202 illustrated in Fig. 4 will be described. First, control data from a control unit 310 and user data from an application unit 302 are transmitted to a protocol processing unit 301. The control data and the user data may be buffered. The buffers of the control data and the user data may be provided in the control unit 310, may be provided in the application unit 302, or may be provided in the protocol processing unit 301. The protocol processing unit 301 performs protocol processing of the SDAP, the PDCP, the RLC, the MAC, and the like, for example, operation such as determination of a transmission destination base station in DC or the like and provision of a header in each protocol. The data subjected to the protocol processing is delivered to an encoder unit 304, and is subjected to encoding processing such as error correction. There may be data that is directly output from the protocol processing unit 301 to a modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to a frequency converting unit 306 to be converted into a radio transmission frequency. Subsequently, transmission signals are transmitted from antennas 307-1 to 307-4 to the base station 213. Although Fig. 4 illustrates an example of a case in which the number of antennas is four, the number of antennas is not limited to four.

Reception processing of the mobile terminal 202 is performed as follows. A radio signal from the base station 213 is received by the antennas 307-1 to 307-4. The received signal is converted from a radio reception frequency into a baseband signal in the frequency converting unit 306, and is subjected to demodulation processing in a demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, the PDCP, the SDAP, and the like, for example, operation such as removal of a header in each protocol. Of the data subjected to the protocol processing, the control data is delivered to the control unit 310 and the user data is delivered to the application unit 302.

The series of processing of the mobile terminal 202 is controlled by the control unit 310. Thus, the control unit 310 is also connected to each of the units 302 and 304 to 309, of which illustration is omitted in Fig. 4.

Each unit of the mobile terminal 202, such as the control unit 310, the protocol processing unit 301, the encoder unit 304, and the decoder unit 309, is implemented by processing circuitry including a processor and a memory, for example. For example, the control unit 310 is implemented by the processor executing a program describing the series of processing of the mobile terminal 202. The program describing the series of processing of the mobile terminal 202 is stored in the memory. Examples of the memory include non-volatile or volatile semiconductor memories, such as a random access memory (RAM), a read only memory (ROM), and a flash memory. Each unit of the mobile terminal 202, such as the control unit 310, the protocol processing unit 301, the encoder unit 304, and the decoder unit 309, may be implemented by dedicated processing circuitry such as a field programmable gate array (FPGA), an application specific integrated circuit (ASIC), and a digital signal processor (DSP). In Fig. 4, the number of antennas used by the mobile terminal 202 for transmission and the number of antennas used thereby for reception may be the same or different.

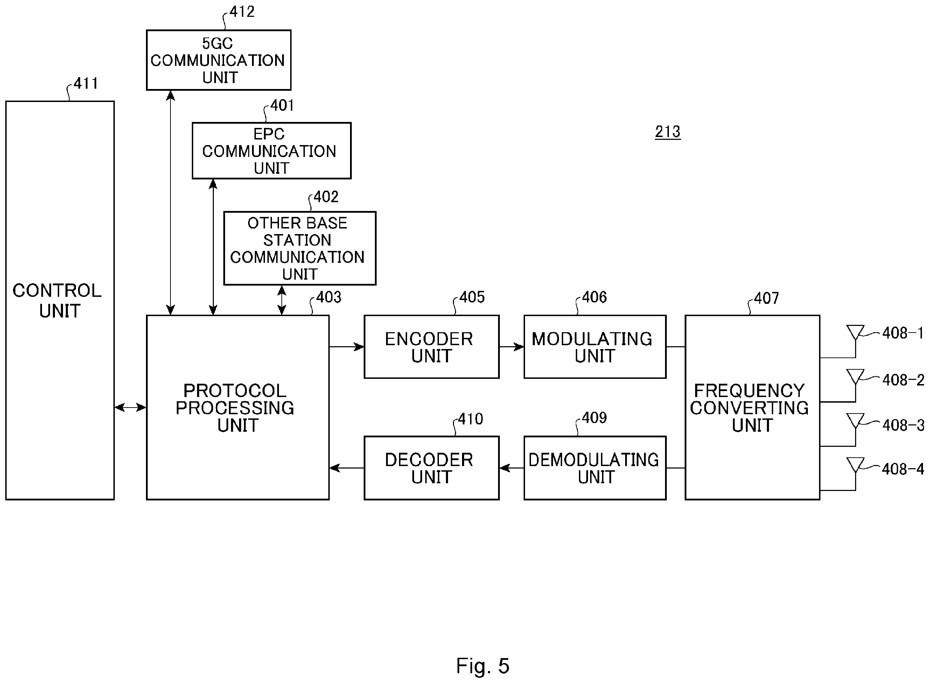

Fig. 5 is a block diagram illustrating a configuration of the base station 213 illustrated in Fig. 2. Transmission processing of the base station 213 illustrated in Fig. 5 will be described. An EPC communication unit 401 transmits and receives data between the base station 213 and the EPC. A 5GC communication unit 412 transmits and receives data between the base station 213 and the 5GC (such as the 5GC unit 214). Another base station communication unit 402 transmits and receives data to and from another base station. Each of the EPC communication unit 401, the 5GC communication unit 412, and such another base station communication unit 402 exchanges information with a protocol processing unit 403. Control data from a control unit 411 and user data and control data from the EPC communication unit 401, the 5GC communication unit 412, and such another base station communication unit 402 are transmitted to the protocol processing unit 403. The control data and the user data may be buffered. The buffers of the control data and the user data may be provided in the control unit 411, may be provided in the EPC communication unit 401, may be provided in the 5GC communication unit 412, or may be provided in such another base station communication unit 402.

The protocol processing unit 403 performs protocol processing of the SDAP, the PDCP, the RLC, the MAC, and the like, for example, operation such as routing of transmission data in DC or the like and provision of a header in each protocol. The data subjected to the protocol processing is delivered to an encoder unit 405, and is subjected to encoding processing such as error correction. There may be data that is directly output from the protocol processing unit 403 to a modulating unit 406 without being subjected to the encoding processing. The data may be transmitted from the protocol processing unit 403 to such another base station communication unit 402. For example, in DC, the data transmitted from the 5GC communication unit 412 or the EPC communication unit 401 may be transmitted to another base station, such as the secondary base station, via such another base station communication unit 402. The encoded data is subjected to modulation processing in the modulating unit 406. In the modulating unit 406, MIMO precoding may be performed. The modulated data is converted into a baseband signal, and is then output to a frequency converting unit 407 to be converted into a radio transmission frequency. Subsequently, transmission signals are transmitted from antennas 408-1 to 408-4 to one or a plurality of mobile terminals 202. Although Fig. 5 illustrates an example of a case in which the number of antennas is four, the number of antennas is not limited to four.

Reception processing of the base station 213 is performed as follows. A radio signal from one or a plurality of mobile terminals 202 is received by the antennas 408-1 to 408-4. The received signal is converted from a radio reception frequency into a baseband signal in the frequency converting unit 407, and is subjected to demodulation processing in a demodulating unit 409. The demodulated data is delivered to a decoder unit 410, and is subjected to decoding processing such as error correction. The decoded data is delivered to the protocol processing unit 403, and is subjected to protocol processing of the MAC, the RLC, the PDCP, the SDAP, and the like, for example, operation such as removal of a header in each protocol. Of the data subjected to the protocol processing, the control data is delivered to the control unit 411, the 5GC communication unit 412, the EPC communication unit 401, or such another base station communication unit 402, and the user data is delivered to the 5GC communication unit 412, the EPC communication unit 401, or such another base station communication unit 402. The data transmitted from such another base station communication unit 402 may be transmitted to the 5GC communication unit 412 or the EPC communication unit 401. The data may be uplink data transmitted to the 5GC communication unit 412 or the EPC communication unit 401 unit via another base station in DC, for example.

The series of processing of the base station 213 is controlled by the control unit 411. Thus, the control unit 411 is also connected to each of the units 401, 402, 405 to 410, and 412, of which illustration is omitted in Fig. 5.

Each unit of the base station 213, such as the control unit 411, the protocol processing unit 403, the 5GC communication unit 412, the EPC communication unit 401, such another base station communication unit 402, the encoder unit 405, and the decoder unit 410, is implemented by processing circuitry including a processor and a memory or dedicated processing circuitry such as an FPGA, an ASIC, and a DSP, as in the case of the mobile terminal 202 described above. In Fig. 5, the number of antennas used by the base station 213 for transmission and the number of antennas used thereby for reception may be the same or different.

As an example of a configuration of the CU 215 illustrated in Fig. 2, a configuration provided with a DU communication unit may be used, except the encoder unit 405, the modulating unit 406, the frequency converting unit 407, the antennas 408-1 to 408-4, the demodulating unit 409, and the decoder unit 410 illustrated in Fig. 5. The DU communication unit is connected to the protocol processing unit 403. The protocol processing unit 403 in the CU 215 performs protocol processing of the PDCP, the SDAP, and the like.

As an example of a configuration of the DU 216 illustrated in Fig. 2, a configuration provided with a CU communication unit may be used, except the EPC communication unit 401, such another base station communication unit 402, and the 5GC communication unit 412 illustrated in Fig. 5. The CU communication unit is connected to the protocol processing unit 403. The protocol processing unit 403 in the DU 216 performs protocol processing of the PHY, the MAC, the RLC, and the like.

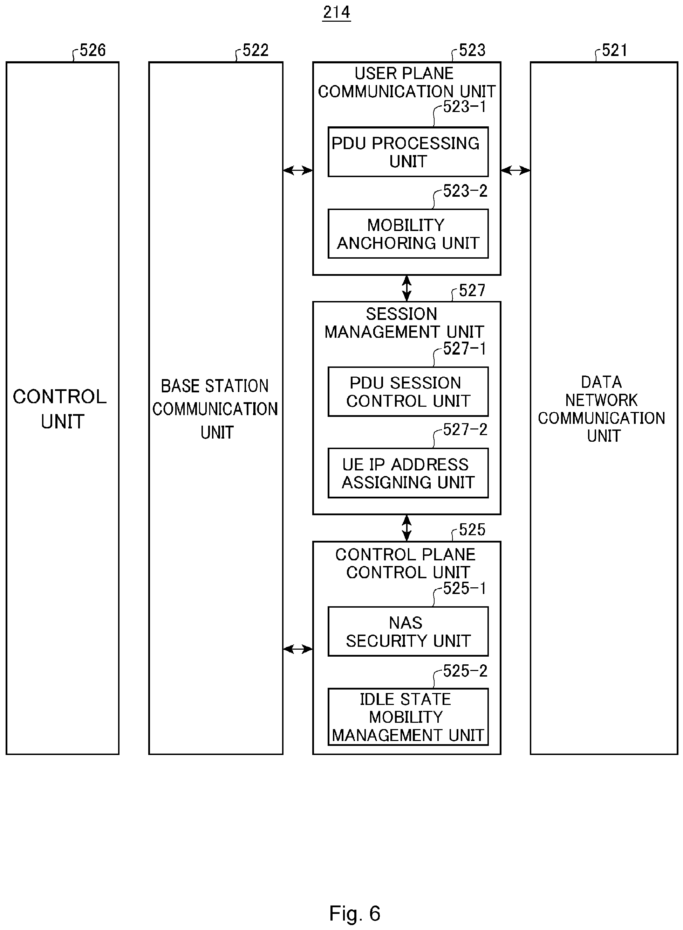

Fig. 6 is a block diagram illustrating a configuration of the 5GC unit. Fig. 6 illustrates a configuration of the 5GC unit 214 illustrated in Fig. 2 described above. Fig. 6 illustrates a case in which a configuration of the AMF, a configuration of the SMF, and a configuration of the UPF are included in the 5GC unit 214 illustrated in Fig. 2. In the example illustrated in Fig. 6, the AMF may have a function of a control plane control unit 525, the SMF may have a function of a session management unit 527, and the UPF may have a function of a user plane communication unit 523 and a data network communication unit 521. The data network communication unit 521 transmits and receives data between the 5GC unit 214 and a data network. The base station communication unit 522 transmits and receives data between the 5GC unit 214 and the base station 213 via an NG interface. User data transmitted from the data network is delivered from the data network communication unit 521 to the base station communication unit 522 via the user plane communication unit 523, and is transmitted to one or a plurality of base stations 213. User data transmitted from the base station 213 is delivered from the base station communication unit 522 to the data network communication unit 521 via the user plane communication unit 523, and is transmitted to the data network.

Control data transmitted from the base station 213 is delivered from the base station communication unit 522 to the control plane control unit 525. The control plane control unit 525 may deliver the control data to the session management unit 527. The control data may be transmitted from the data network. The control data transmitted from the data network may be transmitted from the data network communication unit 521 to the session management unit 527 via the user plane communication unit 523. The session management unit 527 may transmit the control data to the control plane control unit 525.

The user plane control unit 523 includes a PDU processing unit 523-1, a mobility anchoring unit 523-2, and the like, and performs general processing on the user plane (which may be hereinafter also referred to as a U-Plane). The PDU processing unit 523-1 performs processing of data packets, for example, transmission and reception of packets to and from the data network communication unit 521 and transmission and reception of packets to and from the base station communication unit 522. The mobility anchoring unit 523-2 anchors a data path at the time of mobility of the UE.

The session management unit 527 performs management of a PDU session provided between the UE and the UPF and the like. The session management unit 527 includes a PDU session control unit 527-1, a UE IP address assigning unit 527-2, and the like. The PDU session control unit 527-1 performs management of a PDU session between the mobile terminal 202 and the 5GC unit 214. The UE IP address assigning unit 527-2 performs assignment of an IP address to the mobile terminal 202 and the like.

The control plane control unit 525 includes a NAS security unit 525-1, an idle state mobility management unit 525-2, and the like, and performs general processing on the control plane (which may be hereinafter also referred to as a C-Plane). The NAS security unit 525-1 performs security of a Non-Access Stratum (NAS) message and the like. The idle state mobility management unit 525-2 performs mobility management of the idle state (which may also be simply referred to as an "RRC_IDLE state" or "idle"), generation and control of a paging signal in the idle state, addition, deletion, update, search, and tracking area list management of a tracking area of one or a plurality of served mobile terminals 202, and the like.

The series of processing of the 5GC unit 214 is controlled by a control unit 526. Thus, the control unit 526 is connected to each of the units 521 to 523, 525, and 527, of which illustration is omitted in Fig. 6. Each unit of the 5GC unit 214 is implemented by processing circuitry including a processor and a memory or dedicated processing circuitry such as an FPGA, an ASIC, and a DSP, for example, as in the case of the control unit 310 of the mobile terminal 202 described above.

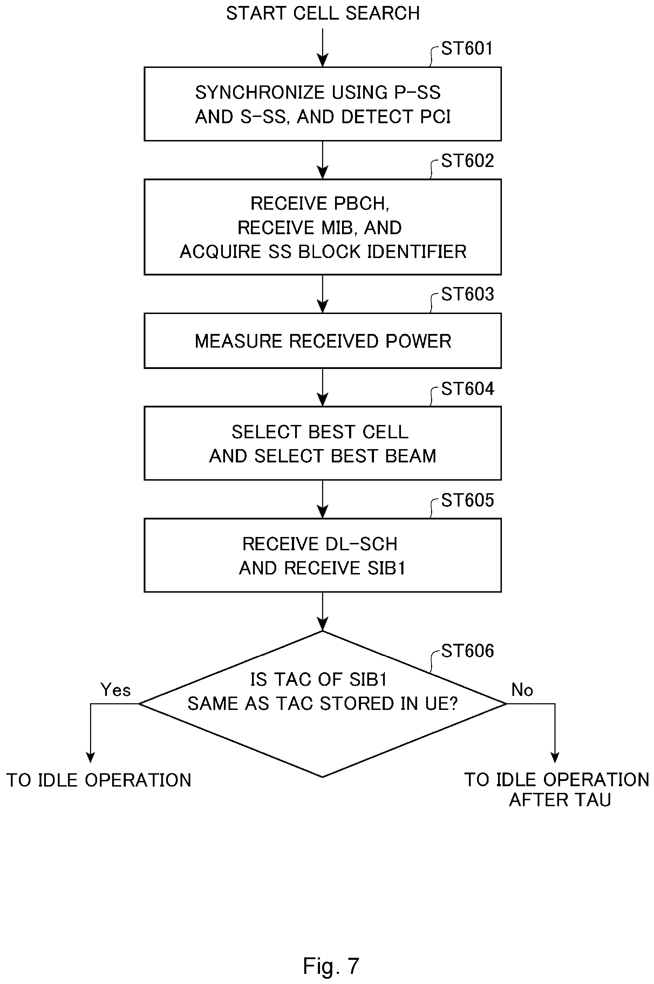

Next, an example of a cell search method in the communication system will be described. Fig. 7 is a flowchart illustrating an outline from cell search to idle operation performed by the communication terminal (UE) in the NR communication system. After the communication terminal starts cell search, in Step ST601, the communication terminal establishes synchronization of a slot timing and a frame timing, using a primary synchronization signal (P-SS) and a secondary synchronization signal (S-SS) transmitted from a neighbor base station.

The P-SS and the S-SS are collectively referred to as a synchronization signal (SS). The synchronization signal (SS) is assigned a synchronization code that corresponds to a physical cell identifier (PCI) assigned to each cell on a one-to-one basis. It is studied that the number of PCIs is 1008. The communication terminal establishes synchronization using the 1008 PCIs, and detects (identifies) the PCI(s) of synchronized cell(s).

Next, in Step ST602, the communication terminal receives a PBCH of the synchronized cell. A master information block (MIB) including cell configuration information is mapped to a BCCH on the PBCH. Thus, by receiving the PBCH and obtaining the BCCH, the MIB can be obtained. Examples of information of the MIB include a system frame number (SFN), scheduling information of a system information block (SIB) 1, subcarrier spacing for the SIB1 or the like, information of a DM-RS position, and the like.

The communication terminal acquires an SS block identifier on the PBCH. A part of a bit string of the SS block identifier is included in the MIB. The rest of the bit string is included in an identifier used to generate a DM-RS sequence accompanying the PBCH. The communication terminal acquires the SS block identifier, using the MIB included in the PBCH and the DM-RS sequence accompanying the PBCH.

Next, in Step ST603, the communication terminal measures received power of an SS block.

Next, in Step ST604, the communication terminal selects a cell having the best received quality, for example, a cell having the highest received power, in other words, the best cell, out of the one or more cells detected up to Step ST603. The communication terminal selects a beam having the best received quality, for example, a beam having the highest received power of the SS block, in other words, the best beam. In selection of the best beam, for example, received power of the SS block of each SS block identifier is used.

Next, in Step ST605, the communication terminal receives a DL-SCH based on the scheduling information of the SIB1 included in the MIB, and obtains the system information block (SIB) 1 in the broadcast information BCCH. The SIB1 includes information on access to the cell, cell configuration information, and scheduling information of another SIB (SIBk: k is an integer satisfying k ≥ 2). The SIB1 includes a tracking area code (TAC).

Next, in Step ST606, the communication terminal compares the TAC of the SIB1 received in Step ST605 and a TAC part of a tracking area identity (TAI) in a tracking area list already stored in the communication terminal. The tracking area list is also referred to as a TAI list. The TAI is identification information for identifying the tracking area, and includes a mobile country code (MCC), a mobile network code (MNC), and a tracking area code (TAC). The MCC is a country code. The MNC is a network code. The TAC is a code number of a tracking area.

As a result of the comparison in Step ST606, if the TAC received in Step ST605 is the same as the TAC included in the tracking area list, the communication terminal starts idle operation in the cell. As a result of the comparison, if the TAC received in Step ST605 is not included in the tracking area list, the communication terminal requests, via the cell, the core network (EPC) including an MME and the like to change the tracking area in order to perform tracking area update (TAU).

An apparatus configuring the core network (which may be hereinafter referred to as a "core network-side apparatus") updates the tracking area list, based on an identification number (a UE-ID or the like) of the communication terminal transmitted from the communication terminal together with a TAU request signal. The core network-side apparatus transmits the updated tracking area list to the communication terminal. The communication terminal rewrites (updates) a TAC list stored in the communication terminal, based on the received tracking area list. Subsequently, the communication terminal starts idle operation in the cell.

Next, an example of a random access method in the communication system will be described. In random access, 4-step random access and 2-step random access are used. In each of the 4-step random access and the 2-step random access, there are contention-based random access, in other words, random access which may cause contention of timings with other mobile terminals, and contention-free random access.

An example of a contention-based 4-step random access method will be described. As a first step, the mobile terminal transmits a random access preamble to the base station. The random access preamble may be selected by the mobile terminal from a predetermined range, or may be individually assigned to the mobile terminal and notified from the base station.

As a second step, the base station transmits a random access response to the mobile terminal. The random access response includes uplink scheduling information to be used in a third step, a terminal identifier to be used in uplink transmission in the third step, and the like.

As the third step, the mobile terminal performs uplink transmission to the base station. The mobile terminal uses the information acquired in the second step in the uplink transmission. As a fourth step, the base station notifies the mobile terminal as to whether contention resolution is achieved. The mobile terminal notified of "without contention" ends random access processing. The mobile terminal notified of "with contention" resumes processing from the first step.

A contention-free 4-step random access method is different from the contention-based 4-step random access method in the following. In other words, prior to the first step, the base station assigns a random access preamble and uplink scheduling to the mobile terminal in advance. A notification as to whether contention resolution is achieved in the fourth step is unnecessary.

An example of a contention-based 2-step random access method will be described. As a first step, the mobile terminal performs transmission of a random access preamble and uplink transmission to the base station. As a second step, the base station notifies the mobile terminal as to whether there is contention. The mobile terminal notified of "without contention" ends random access processing. The mobile terminal notified of "with contention" resumes processing from the first step.

A contention-free 2-step random access method is different from the contention-based 2-step random access method in the following. In other words, prior to the first step, the base station assigns a random access preamble and uplink scheduling to the mobile terminal in advance. As a second step, the base station transmits a random access response to the mobile terminal.

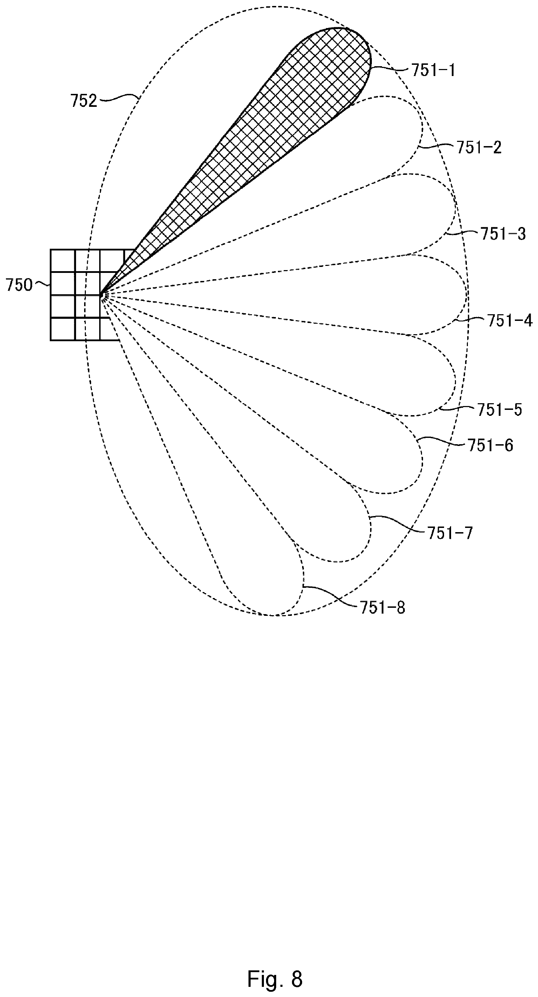

Fig. 8 illustrates an example of a configuration of a cell in NR. In a cell in NR, a narrow beam is formed and is transmitted with its direction being changed. In the example illustrated in Fig. 8, a base station 750 performs transmission and reception to and from the mobile terminal, using a beam 751-1 at a certain time. At another time, the base station 750 performs transmission and reception to and from the mobile terminal, using a beam 751-2. Subsequently, similarly, the base station 750 performs transmission and reception to and from the mobile terminal, using one or a plurality of beams 751-3 to 751-8. In this manner, the base station 750 configures a cell 752 having a wide range.

Although Fig. 8 illustrates an example in which the number of beams used by the base station 750 is eight, the number of beams may be different from eight. In the example illustrated in Fig. 8, although the number of beams simultaneously used by the base station 750 is one, the number of beams may be more than one.

A concept of quasi-colocation (QCL) is used in identification of a beam (see NPL 14 (3GPP TS 38.214)). In other words, identification is performed using information indicating as which beam of a reference signal (for example, an SS block, a CSI-RS) the beam can be considered to be the same. The information may include types of information regarding aspects in which the beam can be considered to be the same beam, for example, information on a Doppler shift, a Doppler shift spread, an average delay, an average delay spread, and a spatial Rx parameter (see NPL 14 (3GPP TS 38.214)).

In 3GPP, a sidelink (SL) is supported for device-to-device (D2D) communication and vehicle-to-vehicle (V2V) communication (see NPL 1 and NPL 16). The SL is defined by a PC5 interface.

In SL communication, support of PC5-S signaling is studied in order to support unicast and groupcast in addition to broadcast (see NPL 27 (3GPP TS 23.287)). For example, the PC5-S signaling is performed to establish the SL, in other words, a link for performing PC5 communication. The link is performed in a V2X layer, and is also referred to as a layer 2 link.

In the SL communication, support of RRC signaling is studied (see NPL 27 (3GPP TS 23.287)). The RRC signaling in the SL communication is also referred to as PC5 RRC signaling. For example, notification of a UE capability and notification of an AS layer configuration and the like for performing V2X communication using the PC5 communication between the UEs performing the PC5 communication are proposed.

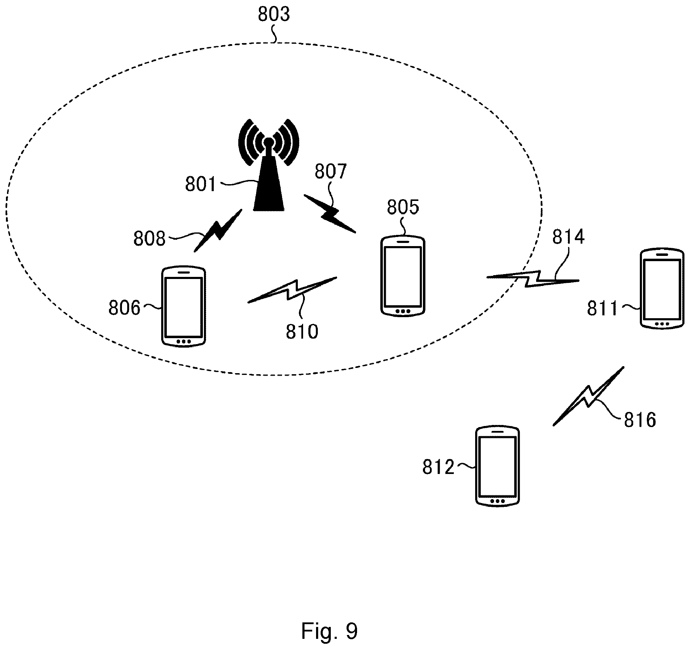

An example of a connection configuration of the mobile terminals in the SL communication is illustrated in Fig. 9. In the example illustrated in Fig. 9, a UE 805 and a UE 806 are present inside coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 are present outside the coverage 803. SL communication 814 is performed between the UE 805 and the UE 811. SL communication 816 is performed between the UE 811 and the UE 812.

As an example of communication between the UE and the NW via relay in the SL communication, the UE 805 illustrated in Fig. 9 relays communication between the UE 811 and the base station 801.

A configuration similar to that of Fig. 4 may be used for the UE performing the relay. Relay processing in the UE will be described with reference to Fig. 4. Relay processing performed by the UE 805 in communication from the UE 811 to the base station 801 will be described. A radio signal from the UE 811 is received by the antennas 307-1 to 307-4. The received signal is converted from a radio reception frequency into a baseband signal in the frequency converting unit 306, and is subjected to demodulation processing in the demodulating unit 308. In the demodulating unit 308, weight calculation and multiplication processing may be performed. The demodulated data is delivered to the decoder unit 309, and is subjected to decoding processing such as error correction. The decoded data is delivered to the protocol processing unit 301, and is subjected to protocol processing of the MAC, the RLC, and the like used for communication with the UE 811, for example, operation such as removal of a header in each protocol. Protocol processing of the RLC, the MAC, and the like used for communication with the base station 801, for example, operation such as provision of a header in each protocol, is performed. In the protocol processing unit 301 of the UE 811, protocol processing of the PDCP and the SDAP may be performed. The data subjected to the protocol processing is delivered to the encoder unit 304, and is subjected to encoding processing such as error correction. There may be data that is directly output from the protocol processing unit 301 to the modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to the frequency converting unit 306 to be converted into a radio transmission frequency. Subsequently, transmission signals are transmitted from the antennas 307-1 to 307-4 to the base station 801.

Although the above description illustrates an example of the relay performed by the UE 805 in communication from the UE 811 to the base station 801, similar processing is also used in relay in communication from the base station 801 to the UE 811.

A 5G base station can support an integrated access and backhaul (IAB) (see NPLs 2 and 20). A base station supporting the IAB (which may be hereinafter referred to as an IAB base station) includes an IAB donor CU being a CU of the base station that operates as an IAB donor providing an IAB function, an IAB donor DU being a DU of the base station that operates as an IAB donor, and an IAB node connected to the IAB donor DU and the UE using a radio interface. An F1 interface is provided between the IAB node and the IAB donor CU (see NPL 2).

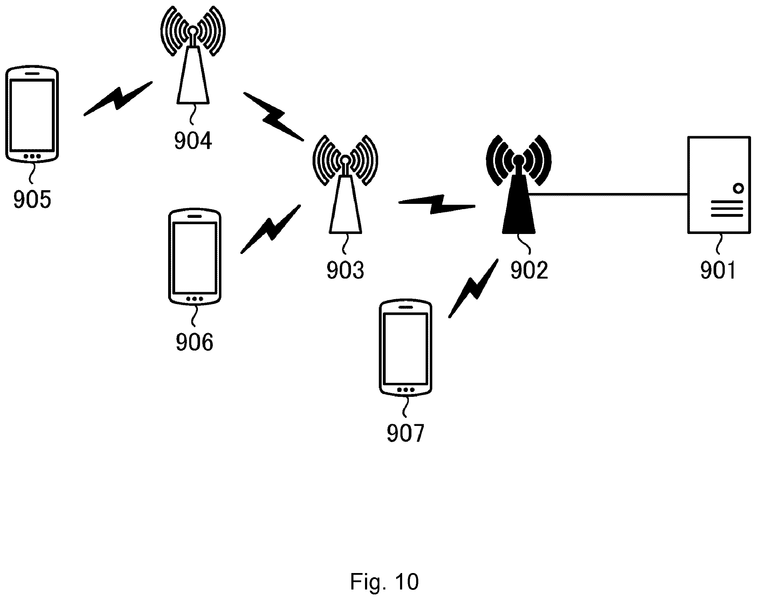

An example of connection of the IAB base stations is illustrated in Fig. 10. An IAB donor CU 901 is connected to an IAB donor DU 902. An IAB node 903 is connected to the IAB donor DU 902, using a radio interface. The IAB node 903 is connected to an IAB node 904, using a radio interface. In other words, multi-stage connection of the IAB nodes may be performed. A UE 905 is connected to the IAB node 904, using a radio interface. A UE 906 may be connected to the IAB node 903 using a radio interface, or a UE 907 may be connected to the IAB donor DU 902 using a radio interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

A Backhaul Adaptation Protocol (BAP) layer is provided in connection between the IAB donor DU and the IAB node and connection between the IAB nodes (see NPL 29). The BAP layer performs operation such as routing of received data to the IAB donor DU and/or the IAB node and mapping of the received data to an RLC channel (see NPL 29).

As an example of a configuration of the IAB donor CU, a configuration similar to that of the CU 215 is used.

As an example of a configuration of the IAB donor DU, a configuration similar to that of the DU 216 is used. In the protocol processing unit of the IAB donor DU, processing of the BAP layer, for example, processing such as provision of a BAP header in downlink data, routing to the IAB node, and removal of the BAP header in uplink data, is performed.

As an example of a configuration of the IAB node, a configuration except the EPC communication unit 401, such another base station communication unit 402, and the 5GC communication unit 412 illustrated in Fig. 5 may be used.

Transmission and reception processing in the IAB node will be described with reference to Fig. 5 and Fig. 10. Transmission and reception processing of the IAB node 903 in communication between the IAB donor CU 901 and the UE 905 will be described. In uplink communication from the UE 905 to the IAB donor CU 901, a radio signal from the IAB node 904 is received by the antenna(s) 408 (a part or all of the antennas 408-1 to 408-4). The received signal is converted from a radio reception frequency into a baseband signal in the frequency converting unit 407, and is subjected to demodulation processing in the demodulating unit 409. The demodulated data is delivered to the decoder unit 410, and is subjected to decoding processing such as error correction. The decoded data is delivered to the protocol processing unit 403, and is subjected to protocol processing of the MAC, the RLC, and the like used for communication with the IAB node 904, for example, operation such as removal of a header in each protocol. Routing to the IAB donor DU 902 using a BAP header is performed, and protocol processing of the RLC, the MAC, and the like used for communication with the IAB donor DU 902, for example, operation such as provision of a header in each protocol, is performed. The data subjected to the protocol processing is delivered to the encoder unit 405, and is subjected to encoding processing such as error correction. There may be data that is directly output from the protocol processing unit 403 to the modulating unit 406 without being subjected to the encoding processing. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted to the IAB donor DU 902 from the antennas 408-1 to 408-4. Similar processing is also performed in downlink communication from the IAB donor CU 901 to the UE 905.

Transmission and reception processing similar to that of the IAB node 903 is also performed in the IAB node 904. In the protocol processing unit 403 of the IAB node 903, as processing of the BAP layer, for example, processing such as provision of a BAP header in uplink communication, routing to the IAB node 904, and removal of the BAP header in downlink communication is performed.

A repeater may be used for communication between the base station and the UE (which may be hereinafter referred to as an access link (AL) (see NPL 31)). The repeater may include a plurality of beams. The repeater may receive a signal from a transmission source, amplify the signal, and transmit the amplified signal to a transmission destination (the operation may be referred to as AL transmission and reception). The repeater may use beams for AL transmission and reception.

The base station may control the repeater. The base station may transmit a control signal to the repeater (a link used for control signal transmission between the base station and the repeater may be referred to as a fronthaul link (FL) (see NPL 31)). L1/L2 signaling may be used for the control signal.

The base station may control the beams used by the repeater. The control performed by the base station may be switching of the beams, for example. The base station may perform switching of the beams, with a trigger being movement of the UE, for example. Measurement may be used for the control performed by the base station. The measurement may be L1 measurement, or may be L3 measurement. The UE may notify the base station of measurement results. Note that L1 measurement is a measurement method in which the measurement results are reported by being included in UCI (see NPL 12 (3GPP TS 38.212)), and L3 measurement is a measurement method in which the measurement results are reported using an RRC message (NPL 2 (3GPP TS 38.300)).

However, none of the literatures in above Citation List discloses targets and procedures of measurement in a case in which the UE connects to the base station via the repeater. This causes a problem that the UE cannot perform measurement and the base station cannot control the beams of the repeater, making the UE unable to connect to the base station via the repeater.

A first embodiment will disclose methods for solving such a problem.

In the methods, the base station transmits a signal used for measurement. The base station may transmit the signal in the AL. The signal may be a CSI-RS, or may be an SS block, for example. The repeater receives the signal and transmits the received signal to the UE. The repeater may perform amplification operation at the time of transmitting the signal. The base station may transmit the signal together with another signal/channel, for example, U plane data for the UE. The repeater may perform amplification operation at the time of transmitting such another signal/channel described above. An amplification rate for a measurement signal and an amplification rate for another signal/channel may be the same or different in the repeater.

The repeater may perform beamforming processing at the time of transmitting the measurement signal to the UE, or may perform beamforming processing at the time of transmitting such another signal/channel to the UE.

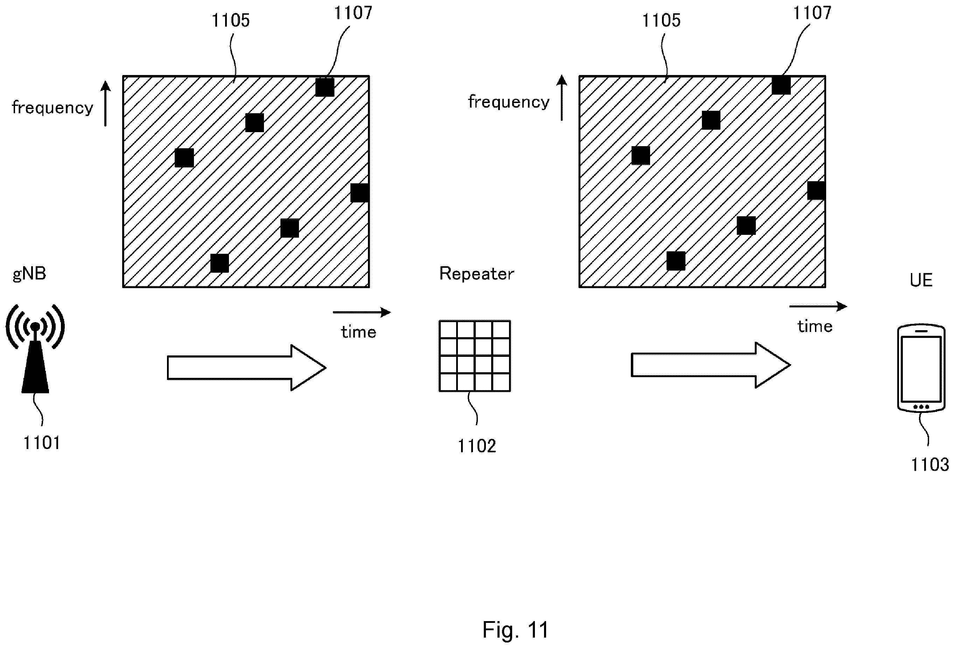

Fig. 11 is a diagram illustrating the measurement signal transmitted from the base station. In Fig. 11, a base station 1101 transmits a measurement signal 1107 to a repeater 1102. In the example illustrated in Fig. 11, a CSI-RS is used as the measurement signal 1107. The base station 1101 may transmit the measurement signal 1107 together with a PDSCH 1105. The repeater 1102 receives the measurement signal 1107 and the PDSCH 1105 from the base station 1101, and transmits the measurement signal 1107 and the PDSCH 1105 to a UE 1103. The repeater 1102 may amplify the measurement signal 1107 and the PDSCH 1105 received from the base station 1101 and transmit the measurement signal 1107 and the PDSCH 1105 to the UE 1103. Beamforming processing may be performed in the transmission of the signal described above from the repeater 1102 to the UE 1103. The UE 1103 receives the measurement signal 1107, and performs measurement. The UE 1103 may acquire U plane data on the PDSCH 1105.

Although Fig. 11 illustrates an example in which the CSI-RS is used as the measurement signal 1107, the SS block may be used. Consequently, for example, in a case in which the UE 1103 is connected to another base station, the UE 1103 can perform measurement of the SS block transmitted via the repeater 1102, and as a result, the UE 1103 can connect to the base station 1101 via the repeater 1102. In the following, description continues with the reference signs of the base station 1101, the repeater 1102, and the UE 1103 being omitted.

The base station may indicate transmission and reception to and from the UE to the repeater. The indication may be performed using the FL, for example. L1/L2 signaling may be used for the indication, for example. New DCI may be provided. The new DCI may be used for the indication. Consequently, for example, malfunction caused by another UE receiving DCI for the repeater can be prevented. As another example, MAC signaling may be used for the indication. Consequently, for example, a large amount of information can be transmitted from the base station to the repeater. As another example, RRC signaling may be used for the indication. Consequently, for example, a larger amount of information can be transmitted from the base station to the repeater.

As examples of information included in the indication, the following (1) to (14) are disclosed.
(1) Information for identifying a transmission apparatus and/or a reception apparatus in AL transmission and reception.
(2) Information on connection of the transmission apparatus and the reception apparatus in AL transmission and reception.
(3) Information on time resources.
(4) Information on frequency resources.
(5) Information on a beam used in AL transmission and reception.
(6) Information on transmission and reception angles.
(7) Information on transmission and reception gains of the repeater.
(8) Information on transmit power of the repeater.
(9) Information on ON/OFF of AL transmission and reception operations of the repeater.
(10) Information on directions of links of AL transmission and reception of the repeater.
(11) Information on signals/channels transmitted and received by the repeater.
(12) Information on default operation.
(13) Information on transparency in the repeater or the like.
(14) A combination of (1) to (13) described above.

The information of (1) described above may include an identifier of the UE. The identifier of the UE may include a Cell Radio Network Temporary Identifier (C-RNTI), for example. Consequently, for example, the repeater can quickly recognize the UE as a partner of AL transmission and reception. As another example, the information may include an identifier of the base station, may include an identifier of the DU, may include an identifier of the TRP, may include an identifier of the cell, or may include an identifier of the IAB node. Consequently, for example, the repeater can quickly recognize the base station, the DU, and/or the IAB node as a partner of AL transmission and reception.

The information of (2) described above may include information on a PDU session used by the UE, for example. The repeater may recognize an apparatus as a transmission source and an apparatus as a transmission destination, using the information. Consequently, for example, the size of signaling from the base station to the repeater can be reduced.

The information of (3) described above may include information on times at which AL transmission and reception start, may include information on duration of AL transmission and reception, or may include information on times at which AL transmission and reception end. The information described above may include one of or a combination of two or more of a radio frame number, a subframe number, a slot number, and a symbol number. As another example, the information of (3) described above may include information on time from the indication to the start of AL transmission and reception. The information may include one of or a combination of two or more of a radio frame number, a subframe number, a slot number, and a symbol number. As another example, the information of (3) described above may include information on a slot length, or may include information on a subcarrier spacing (SCS). The repeater may acquire information on timings at which AL transmission and reception are performed, using the information. The repeater may perform AL transmission and reception in the time resources included in the information of (3) described above. The repeater may stop AL transmission and reception or may perform default AL transmission and reception outside the time resources included in the information of (3) described above. Consequently, for example, the repeater can perform AL transmission and reception at appropriate timings, and can reduce power consumption of the repeater.

The information of (4) described above may include information on the bottom end of the frequency resources (for example, subcarriers) in which AL transmission and reception are performed, or may include information on the top end of the frequency resources. The information described above may include information on a frequency, may include information on a subcarrier number, or may include information on a physical resource block (PRB). The information of (4) described above may include information on a range of the frequency resources. The information on the range may include information on a frequency width, may include information on the number of subcarriers, or may include information on the number of PRBs. The information of (4) described above may include information on a frequency band including the frequency resources. The information on the frequency band may include information on a band of the carrier, or may include information on the BWP. The repeater may acquire the information on the frequency used for AL transmission and reception, using the information. The repeater may perform transmission and reception operations for AL transmission and reception in the frequency resources included in the information of (4) described above. The repeater may not perform transmission and reception operations for AL transmission and reception outside the frequency resources included in the information of (4) described above. For example, the repeater can perform AL transmission and reception in an appropriate frequency range, and can reduce power consumption of the repeater.

The information of (5) described above may include information on a beam used by the base station, the DU, the TRP, and/or the IAB node (these may be hereinafter collectively referred to as the base station and/or the like), may include information on a beam used by the repeater in transmission and reception to and from the base station and/or the like, or may include information on a beam used by the repeater in transmission and reception to and from the UE. As another example, the information of (5) described above may include information on a beam used by the repeater in reception operation, or may include information on a beam used by the repeater in transmission operation. The information on the beam described above may include an identifier of the SS block, or may include an identifier of the CSI-RS. The identifier described above may be the identifier of the SS block and/or the CSI-RS included in a beam having a QCL relationship with a beam received by the repeater, for example. The information of (5) described above may include information on an RS transmitted by the repeater. The information on the RS may include information on a configuration of the CSI-RS transmitted by the repeater, or may include information on a configuration of the SS block transmitted by the repeater, for example. The repeater may direct the beam at an apparatus as a partner of AL transmission and reception, using the information. Consequently, for example, communication via the repeater between the base station and/or the like and the UE can be performed.

The information of (5) described above may include information on a beam width. The repeater may determine the beam width, using the information. For example, a beam having a narrow width may be used in transmission from the repeater to the base station, or a beam having a wide width may be used in transmission from the repeater to a frequently moving UE. Consequently, for example, communication with secured reliability can be performed with low power consumption.

The information of (6) described above may include information on a reception angle in the repeater, or may include information on a transmission angle in the repeater. The information on the angle described above may include information on an azimuth, or may include information on an angle of elevation, for example. The information on the angle described above may be given as an angle with reference to a predetermined direction. The predetermined direction may be an absolute direction, for example, a horizontal northward direction, or may be a relative direction, for example, a direction from the repeater toward the base station. The repeater may perform transmission and reception operations for AL transmission and reception, using the information. The repeater may not receive radio waves from angles other than the reception angle included in the information of (6) described above. Consequently, for example, performance (for example, a signal to interference noise ratio (SINR)) in transmission and reception via the repeater can be enhanced.

The information of (6) described above may include information on an angle of transmitting reflected waves in the repeater. The information may be included in a case in which a reflector is used or may be included in a case in which a reconfigurable intelligent surface (RIS) is used in place of the repeater, for example. Consequently, for example, power consumption in the communication system can be reduced, and coverage of the base station can be enhanced.

The information of (7) described above may include information on a reception gain in the repeater, may include information on a transmission gain in the repeater, or may include information on a gain from a reception end to a transmission end in the repeater. The repeater may perform amplification operation in AL transmission and reception, using the information. Consequently, for example, the repeater can perform AL transmission and reception using necessary and sufficient power for AL transmission and reception between the base station and/or the like and the UE, and as a result, interference with other base stations and/or the like and/or UEs can be reduced.

The information of (7) described above may include information on an attenuation amount in the repeater. The information on the attenuation amount may include information on the attenuation amount in a receiver, may include information on the attenuation amount in a transmitter, or may include information on the attenuation amount from the transmission end to the reception end. Consequently, for example, power can be reduced in a case in which power used in AL transmission and reception is great, and as a result, interference with apparatuses in surrounding communication systems can be reduced. Even in a relay apparatus that does not perform amplification, for example, even in a case in which a reflector or an RIS is used, power for AL transmission and reception can be controlled.

The repeater may transmit a signal to the base station and/or the like and/or the UE, using the information on (8) described above. Consequently, for example, transmission and reception between the base station and/or the like and the UE can be performed, and interference with other base stations and/or the like and/or UEs can be reduced.

The repeater may start AL transmission and reception operations or stop AL transmission and reception operations, using the information of (9) described above. Consequently, for example, power consumption in the repeater can be reduced.

The information of (10) described above may include information on the uplink, may include information on the downlink, or may include information on the sidelink, for example. The repeater may determine a reception destination and/or a transmission destination in AL transmission and reception, using the information. Consequently, for example, the signaling amount from the base station to the repeater can be reduced.

The information of (11) described above may include information indicating a dedicated signal/channel for transmission to a UE, or may include information indicating a shared signal/channel for transmission to UEs, for example. The information of (11) described above may include information indicating data (for example, U plane data), may include information indicating a control signal, or may include information indicating a reference signal. The information of (11) described above may include information for identifying a signal/channel (for example, the PDCCH, the PUSCH, the SS block), for example. The repeater may perform AL transmission and reception operations, using the information. Consequently, for example, complexity in control of the repeater can be avoided.

The information of (11) described above may include information on repetitions of the signal/channel described above. The information may include information on the number of repetitions, for example. The repeater may perform a plurality of AL transmissions and receptions, using the information. Consequently, for example, repetitions of the signal/channel via the repeater can be performed in the communication system.

The information of (12) described above may include information on AL transmission and reception operations of the repeater in a case in which there is no indication from the base station, for example. The information may be information indicating that AL transmission and reception of the repeater are turned off, may be information indicating that the repeater performs reception operation using a predetermined beam, or may be information indicating that the repeater performs transmission operation using a predetermined beam, for example. The repeater may perform default AL transmission and reception operations, using the information. Consequently, for example, the signaling amount for AL transmission and reception can be reduced.

The information of (13) described above may include information on transmittance with respect to incident power, may include information on transmitted power, may include information on reflectance with respect to incident power, or may include information on reflected power, for example. The information may be used in the reflector and/or the RIS, for example. An apparatus such as the repeater may control the apparatus, using the information, for example. Consequently, for example, complexity of control of reflected power can be avoided even in a case in which control of the attenuation amount is complicated.

The information of (1) to (14) described above may be provided for each UE, or may be provided for each signal/channel. For example, a beam used for transmission of the SS block and a beam used for transmission of the PDCCH and/or the PDSCH may be different. Consequently, for example, in the communication system, power efficiency can be secured, and coverage can be enhanced.

The measurement may be L1 measurement (see NPLs 14 and 32 (3GPP TS 38.215)), for example. A target to be measured in the L1 measurement in the UE may be RSRP, RSRQ, and/or an SINR of the CSI, may be RSRP, RSRQ, and/or an SINR of the SS block, or may be a combination of two or more of the above, for example. The base station may notify the UE of information on the target to be measured. The UE may perform the L1 measurement, using the information obtained in the notification.

The target to be measured may include received signal strength. The notification from the base station to the UE may include information on the received signal strength. Consequently, for example, the UE can quickly perform measurement.

The UE may perform CSI feedback to the base station. The CSI feedback may be performed using results of the L1 measurement described above. The CSI feedback may include a CQI, may include a PMI, may include an RI, may include a CSI-RS resource indicator (CRI), may include an SS block resource indicator (SS/PBCH resource indicator (SSBRI)), may include a layer indicator (LI), may include L1-RSRP, may include an L1-SINR, or may include two or more of the above, for example. The CRI and/or the SSBRI may be the CRI and/or the SSBRI notified from the base station, for example, of which measurement is indicated from the base station.

The CSI feedback notified from the UE to the base station may not include the PMI. For example, in a case in which the repeater does not perform precoding, the CSI feedback transmitted by the UE may not include the PMI. Consequently, for example, the size of the CSI feedback from the UE can be reduced.

The base station may indicate information to be included in the CSI feedback to the UE. The indication may be performed using RRC signaling.

Using the information obtained in the CSI feedback, the base station may perform beam control in the base station, may perform transmit power control, may perform an indication of beam control to the repeater, or may perform an indication of transmit power to the repeater.

The base station may notify the UE of a configuration of the CSI-RS. The notification from the base station to the UE may be performed via the repeater. RRC signaling may be used for the notification, for example. The notification may include information on time/frequency resources of the CSI-RS, or may include information on an identifier of the CSI-RS. Using the notification, the UE may receive the CSI-RS, or may perform the CSI feedback.

The notification of the configuration of the CSI-RS and/or the information to be included in the CSI feedback from the base station to the UE may be related to a plurality of CSI-RSs. For the UE, the base station may perform a configuration related to a plurality of CSI-RSs, or may perform a configuration of the CSI feedback related to a plurality of CSI-RSs. Consequently, for example, the UE can perform measurement of a plurality of beams transmitted from the repeater.

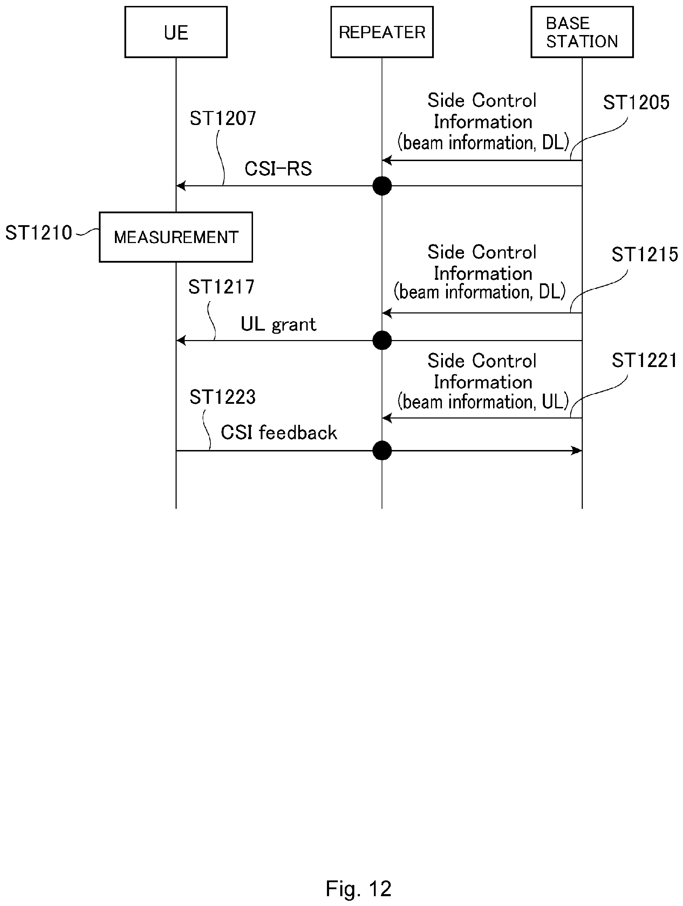

Fig. 12 is a diagram illustrating an example of an operation sequence of L1 measurement in the UE to connect to the base station via the repeater. Fig. 12 illustrates an example in which the CSI-RS is used in L1 measurement. Fig. 12 illustrates an example in which the base station transmits a CSI-RS and the UE receives the CSI-RS. In Fig. 12, arrows with black dots indicate that signal transmission and reception between the base station and the UE are performed via the repeater.

In Step ST1205 illustrated in Fig. 12, the base station indicates a configuration of a beam to the repeater. The indication may include information on the beam to be used by the repeater, may include information indicating performing of transmission and reception of a downlink signal, may include information on time/frequency resources in which the repeater performs transmission and reception, or may include information on the UE. Step ST1205 may be performed using side control information (see NPL 30). Step ST1205 may be L1/L2 signaling from the base station to the repeater, for example. The repeater performs control of the beam or the like for transmission from the base station to the UE, using the information received in Step ST1205. In Step ST1207, the base station transmits the CSI-RS to the repeater, and the repeater receives the CSI-RS and transmits the CSI-RS to the UE. The repeater may perform power control, for example, amplification, of the CSI-RS. In Step ST1210, the UE measures the CSI-RS transmitted from the base station via the repeater.

In Step ST1215 illustrated in Fig. 12, the base station indicates a configuration of a beam to the repeater. Signaling similar to that of Step ST1205 may be used for the indication. In Step ST1217, the base station transmits an uplink grant for the UE to the repeater, and the repeater receives the uplink grant and transmits the uplink grant to the UE.

In Step ST1221 illustrated in Fig. 12, the base station indicates a configuration of a beam to the repeater. The indication may include information indicating performing of transmission and reception of an uplink signal. Signaling similar to that of Step ST1205 may be used for the indication. In Step ST1223, the UE transmits the CSI feedback to the repeater, and the repeater receives the CSI feedback and transmits the CSI feedback to the base station. The CSI feedback may include measurement results of Step ST1210.

Prior to Step ST1205 illustrated in Fig. 12, a configuration of the CSI-RS may be performed from the base station to the UE. The configuration may be performed using RRC signaling, for example. The configuration may be performed via the repeater. Consequently, for example, the UE can quickly recognize the CSI-RS to be received.

As another example of the measurement, L3 measurement (see NPL 19) may be used. The base station may notify the UE of information on a signal to be measured, or may notify the UE of information on a measurement report. A signal as a target to be measured in the UE may be a signal transmitted via the repeater. The UE may perform L3 measurement, using the information. The UE may notify the base station of measurement results. The base station may determine handover of the UE, using the notified measurement results, for example. Consequently, for example, the UE can perform handover to another base station via the repeater.

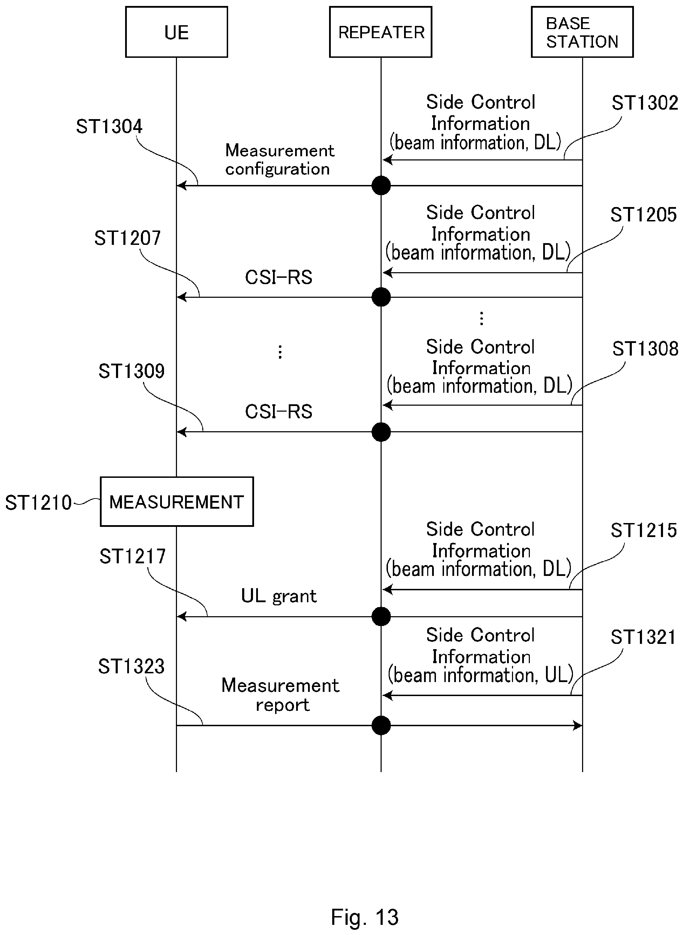

Fig. 13 is a diagram illustrating an example of an operation sequence of L3 measurement in the UE to connect to the base station via the repeater. Fig. 13 illustrates an example in which the CSI-RS is used in L3 measurement. Fig. 13 illustrates an example in which the base station transmits a CSI-RS and the UE receives the CSI-RS. In Fig. 13, arrows with black dots indicate that signal transmission and reception between the base station and the UE are performed via the repeater. In Fig. 13, the same processings as those of Fig. 12 are denoted by the same step numbers, and common description will be omitted.

In Step ST1302 illustrated in Fig. 13, the base station indicates a configuration of a beam to the repeater. Signaling similar to that of Step ST1205 in Fig. 12 may be used for the indication. In Step ST1304, the base station transmits measurement for the UE to the repeater, and the repeater receives the measurement configuration and transmits the measurement configuration to the UE. In Step ST1304, RRC signaling, for example, RRC reconfiguration (RRCReconfiguration), may be used.

Steps ST1205 and ST1207 illustrated in Fig. 13 are the same as those of Fig. 12.

Steps ST1308 and ST1309 illustrated in Fig. 13 are the same as Steps ST1205 and ST1207, respectively.

Steps ST1210 to ST1217 illustrated in Fig. 13 are the same as those of Fig. 12.

In Step ST1321 illustrated in Fig. 13, the base station indicates a configuration of a beam to the repeater. The indication may include information indicating performing of transmission and reception of an uplink signal. Signaling similar to that of Step ST1205 may be used for the indication. In Step ST1323, the UE transmits a measurement report to the repeater, and the repeater receives the measurement report and transmits the measurement report to the base station. In Step ST1323, RRC signaling, for example, a measurement report (MeasurementReport), may be used.

Although Fig. 13 illustrates an example in which the CSI-RS is used as the measurement signal 1107 illustrated in Fig. 11, the SS block may be used. Consequently, for example, the UE to connect to the base station via the repeater can also measure the SS block.

In the measurement of the measurement signal via the repeater, the following problem occurs. In other words, in a case in which received quality in the UE is poor, it cannot be determined as to whether a radio wave environment between the base station and the repeater is poor or a radio wave environment between the repeater and the UE is poor. As an example of a case in which received quality is poor, a case is considered in which received power in the UE is low. The base station increases transmit power, using measurement results notified from the UE. As a result, for example, increasing the transmit power from the base station even in a case in which attenuation between the base station and the repeater is low and attenuation between the repeater and the UE is large results in excessive power between the base station and the repeater, and this may thus interfere with other communication apparatuses.

As a solution to the problem described above, the base station configures transmit power for the repeater. The configuration may be performed using the FL, for example. For the configuration, RRC signaling may be used, MAC signaling may be used, or L1/L2 signaling may be used. The repeater may perform transmission to the UE together with another signal/channel, using the configured power. The UE notifies the base station of reception results of the signal from the repeater. Consequently, for example, the base station can recognize the attenuation amount between the repeater and the UE.

As another solution to the problem described above, the repeater may measure a signal transmitted from the base station.

The base station may indicate measurement of a measurement signal to the repeater. The indication may be performed using the FL, for example. The indication may be transmitted using side control information, for example. L1/L2 signaling may be used for the indication. Consequently, for example, quick signaling can be performed from the base station to the repeater. As another example, MAC signaling may be used for the indication. Consequently, for example, a large amount of information can be notified from the base station to the repeater. As another example, RRC signaling, for example, RRC reconfiguration (RRCReconfiguration), may be used for the indication. Consequently, for example, a larger amount of information can be notified from the base station to the repeater.

The indication may include information for identifying the measurement signal to be measured, for example. The identifier may be an identifier of the CSI-RS, or may be an identifier of the SS block, for example. The indication may include information on resources of the measurement signal to be measured. The information on the resources may include information on a PRB to which the measurement signal is allocated, may include information on a symbol, may include information on a resource element (RE), may include information on periodicity, or may include information on an antenna port, for example. The indication may include information on the UE related to the measurement, for example, an identifier of the UE.

The measurement performed by the repeater may be L1 measurement, for example.

The repeater may perform CSI feedback to the base station. The CSI feedback from the repeater to the base station may include measurement results of the repeater.

The base station may perform control of the base station, for example, control of transmit power, using the measurement results notified from the repeater.

Measurement in the repeater and measurement in the UE may both be performed. The repeater and the UE may both notify the base station of measurement results. The base station may perform control of the base station, or may perform control of the repeater, using the measurement results notified from the repeater and/or the measurement results notified from the UE. Consequently, for example, the base station can perform appropriate control for a transmission path having a poor radio wave environment.

The measurement signal measured by the repeater may be the same signal as the measurement signal measured by the UE, for example. The repeater may perform both of measurement of the measurement signal and transmission to the UE. Consequently, for example, signals used for measurement can be reduced, and as a result, efficiency in the communication system can be enhanced.

The repeater may have a function of distributing and/or duplicating a received signal. The number of distributions and/or duplications may be 2, or may be 3 or more. The epeater may use one or a plurality of the distributed or duplicated received signals for measurement, or may use one or a plurality of the remainder for transmission to the UE. The repeater may not use the distributed or duplicated received signals for measurement.

The repeater may perform transmission, using a plurality of beams. The function of distributing and/or duplicating a received signal may be used for the transmission using a plurality of beams, for example. Each of the plurality of beams may be subjected to amplification and/or phase shift. Consequently, for example, regarding signals transmitted from the repeater, received quality in the UE can be enhanced. Simultaneous transmission to a plurality of UEs can be performed, and efficiency in the communication system can be enhanced.

The repeater may perform reception, using a plurality of beams. The repeater may have a function of multiplexing signals received from the plurality of beams. In the multiplexing, the received signal of each beam may be subjected to amplification and/or phase shift. Consequently, for example, received quality in the repeater can be enhanced. Signals from a plurality of UEs can be simultaneously received, and efficiency in the communication system can be enhanced.

Capabilities of the repeater may include information on the number of distributions and/or duplications in the repeater, may include information on the number of transmit and/or receive beams that can be simultaneously supported by the repeater, may include information on the amplification and/or the phase shift described above, or may include information on a noise figure in amplification of the repeater.

The base station may indicate distribution and/or duplication to the repeater. The indication may include information on the number of distributions and/or duplications. The base station may perform the indication, using the capabilities described above, for example. The indication may be included in an indication from the base station regarding transmission and reception to and from the UE, or different signaling may be provided and the signaling may be used for the indication, for example. The different signaling may be RRC signaling, may be MAC signaling, or may be L1/L2 signaling. The repeater may perform the distribution and/or the duplication described above, using the indication. Consequently, for example, flexible control in the communication system can be performed.

The base station may notify the UE of information on the distribution and/or the duplication in the repeater. The notification may include information on the noise figure of the repeater. The UE may correct measurement results, using the information. For example, the UE may correct the power reduced due to the distribution in the repeater, or may correct the SINR deteriorated due to the duplication in the repeater. Consequently, for example, the UE can appropriately derive the best beam in measurement.

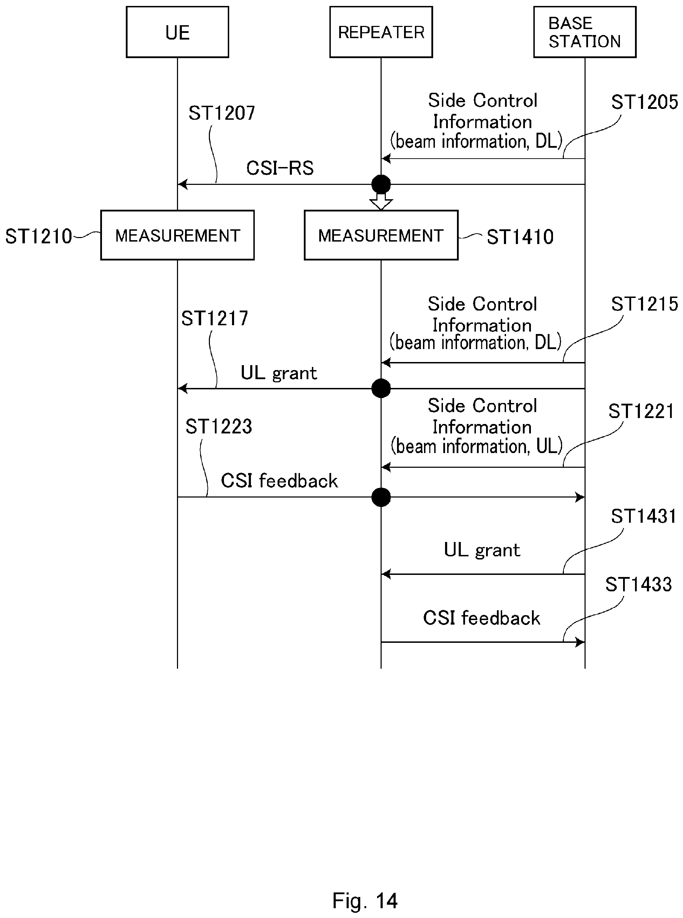

Fig. 14 is a diagram illustrating another example of an operation sequence of L1 measurement in the repeater. In the example illustrated in Fig. 14, the UE is connected to the base station via the repeater. In the example illustrated in Fig. 14, the repeater measures the same CSI-RS as the CSI-RS measured by the UE. In Fig. 14, the same processings as those of Fig. 12 are denoted by the same step numbers, and common description will be omitted.

Steps ST1205, ST1207, and ST1210 illustrated in Fig. 14 are the same as those of Fig. 12. In Step ST1410, the repeater measures the CSI-RS of Step ST1207. In other words, the repeater itself may measure the CSI-RS of Step ST1207, and transmit the CSI-RS to the UE.

Steps ST1215 to ST1223 illustrated in Fig. 14 are the same as those of Fig. 12.

In Step ST1431 illustrated in Fig. 14, the base station transmits an uplink grant to the repeater. In Step ST1433, the repeater transmits CSI feedback to the base station. The CSI feedback of Step ST1433 may be used for notification of measurement results in Step ST1410.

The repeater may measure a signal different from the measurement signal for the UE. A measurement signal used for measurement in the repeater may be provided.

The measurement signal for the repeater may be assigned an identifier different from that of the measurement signal for the UE. Consequently, for example, complexity of management of the measurement signals in the base station can be avoided. As another example, the measurement signal for the repeater may be assigned the same identifier as that of the measurement signal for the UE. Consequently, for example, the base station can quickly recognize association between the repeater and the UE.

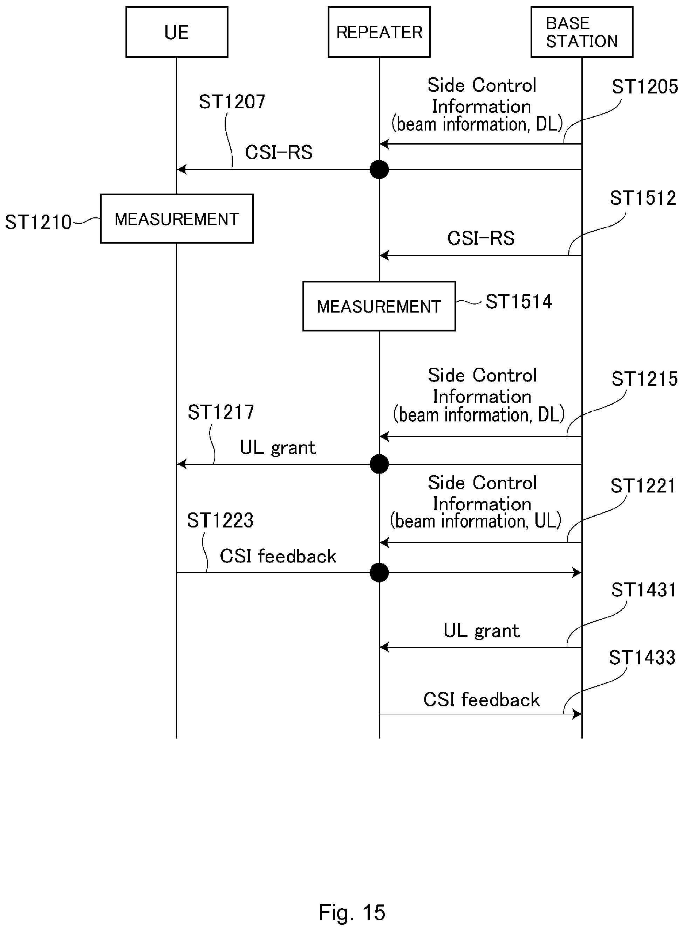

Fig. 15 is a diagram illustrating another example of an operation sequence of L1 measurement in the repeater. In the example illustrated in Fig. 15, the UE is connected to the base station via the repeater. In the example illustrated in Fig. 15, the repeater measures a CSI-RS different from the CSI-RS measured by the UE. In Fig. 15, the same processings as those of Fig. 12 and Fig. 14 are denoted by the same step numbers, and common description will be omitted.

Steps ST1205 to ST1210 illustrated in Fig. 15 are the same as those of Fig. 12.

In Step ST1512 illustrated in Fig. 15, the base station transmits the CSI-RS to the repeater. In Step ST1514, the repeater performs measurement of the CSI-RS.

Prior to Step ST1512 illustrated in Fig. 15, the base station may notify the repeater of information on a configuration of the CSI-RS. The repeater may receive the CSI-RS of Step ST1512, using the information.

Steps ST1215 to ST1223 illustrated in Fig. 15 are the same as those of Fig. 12.

Steps ST1431 and ST1433 illustrated in Fig. 15 are the same as those of Fig. 14.

Although Fig. 15 illustrates a case in which the measurement in the UE is performed prior to the measurement in the repeater, the measurement in the repeater may be performed prior to the measurement in the UE. Although Fig. 15 illustrates a case in which the CSI feedback from the UE is performed prior to the CSI feedback from the repeater, the CSI feedback from the repeater may be performed prior to the CSI feedback from the UE. Consequently, for example, the base station can perform control for the UE by taking account of a radio wave propagation environment between the base station and the repeater, and as a result, the base station can efficiently perform control for the UE.

As another example of the measurement performed by the repeater, L3 measurement may be performed. The base station may notify the repeater of information on a signal to be measured, or may notify the repeater of information on a measurement report. The repeater may perform L3 measurement, using the information. The repeater may notify the base station of measurement results. The base station may perform control for the repeater, using the information.

The repeater may perform a measurement report to the base station. For the measurement report from the repeater to the base station, RRC signaling, for example, measurement report (MeasurementReport) signaling, may be used. Consequently, for example, complexity of design of the communication system can be avoided.

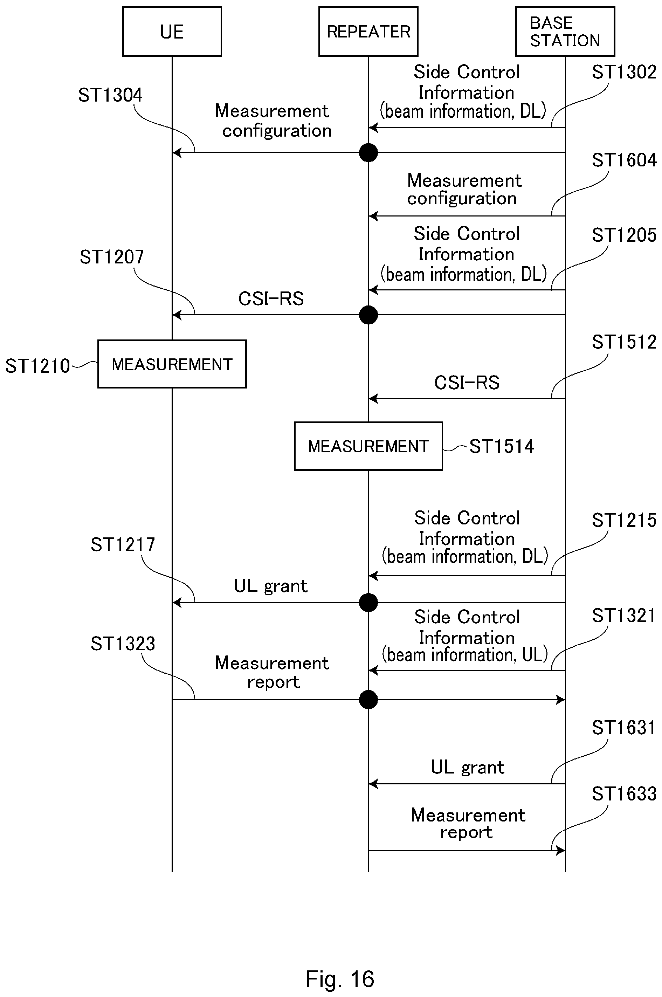

Fig. 16 is a diagram illustrating another example of an operation sequence of L3 measurement in the repeater. In the example illustrated in Fig. 16, the UE connects to the base station via the repeater, and performs L3 measurement. In the example illustrated in Fig. 16, the repeater measures a CSI-RS different from the CSI-RS measured by the UE. In Fig. 16, the same processings as those of Fig. 12, Fig. 13, and Fig. 15 are denoted by the same step numbers, and common description will be omitted.

Steps ST1302 and ST1304 illustrated in Fig. 16 are the same as those of Fig. 13.

In Step ST1604 illustrated in Fig. 16, the base station performs a measurement configuration for the repeater. The configuration may be performed using L1/L2 signaling, may be performed using MAC signaling, or may be performed using RRC signaling, for example, RRC reconfiguration (RRCReconfiguration). The repeater may start measurement of the CSI-RS, with a trigger being Step ST1604.

Steps ST1205 to ST1210 illustrated in Fig. 16 are the same as those of Fig. 12. Steps ST1512 and ST1514 are the same as those of Fig. 15. Steps ST1215 and ST1217 are the same as those of Fig. 12. Steps ST1321 and ST1323 are the same as those of Fig. 13.

In Step ST1631 illustrated in Fig. 16, the base station transmits an uplink grant to the repeater. In Step ST1633, the repeater performs a measurement report to the base station. The measurement report in Step ST1633 may include measurement results in Step ST1514, for example. In Step ST1633, RRC signaling, for example, a measurement report (MeasurementReport), may be used.

Although Fig. 16 illustrates a case in which the CSI-RS measured by the UE and the CSI-RS measured by the repeater are different, the UE and the repeater may measure the same CSI-RS. In this case, for example, the repeater may measure the CSI-RS of Step ST1210 illustrated in Fig. 16, using a configuration similar to that for the measurement of Step ST1410 illustrated in Fig. 14. Consequently, for example, resources of the CSI-RS in the communication system can be saved.

Although Fig. 16 illustrates a case in which the measurement in the UE is performed prior to the measurement in the repeater, the measurement in the repeater may be performed prior to the measurement in the UE. Although Fig. 16 illustrates a case in which the measurement report from the UE is performed prior to the measurement report from the repeater, the measurement report from the repeater may be performed prior to the measurement report from the UE. Consequently, for example, the base station can perform control for the UE by taking account of a radio wave propagation environment between the base station and the repeater, and as a result, the base station can efficiently perform control for the UE.

As another solution, the repeater may transmit a measurement signal to the UE. The UE may measure the measurement signal, for example, the CSI-RS, transmitted from the repeater.

The base station may not transmit a downlink signal/channel in the time/frequency resources occupied by the measurement signal transmitted by the repeater. The repeater may add the measurement signal to a signal received from the base station, and transmit the measurement signal to the UE. As another example, the repeater may transmit the measurement signal to the UE during a time in which the base station performs transmission using a beam different from that for the repeater.

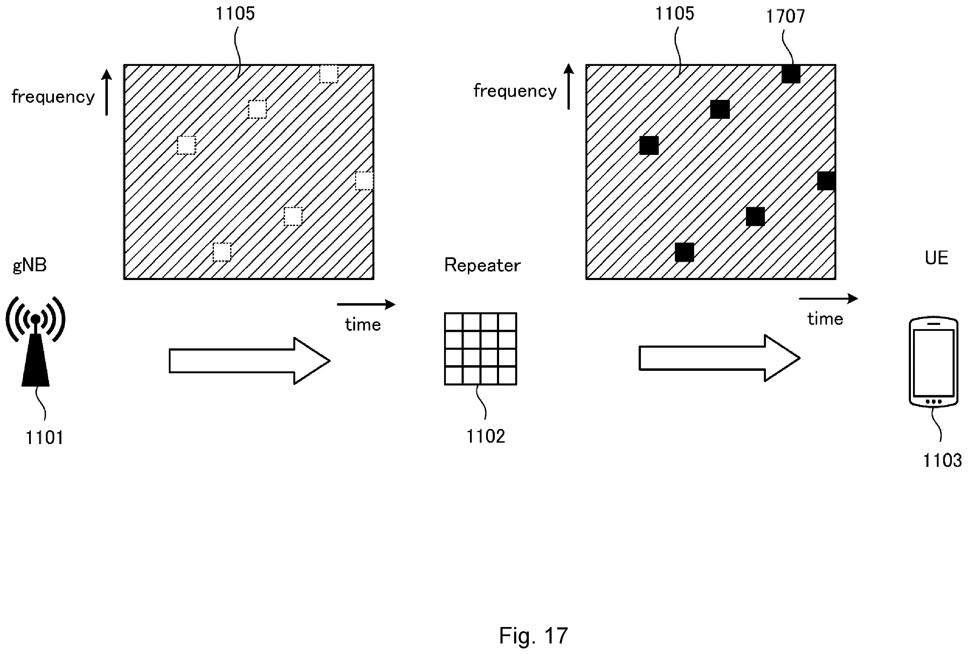

Fig. 17 is a diagram illustrating the measurement signal transmitted from the repeater. In Fig. 17, the base station 1101 performs transmission of the PDSCH 1105 to the repeater 1102. The base station 1101 performs transmission of the PDSCH 1105, with resources (for example, REs) in which a measurement signal 1707 is transmitted being blank. The repeater 1102 receives the PDSCH 1105 from the base station, adds the measurement signal 1707, and transmits the PDSCH 1105 to the UE 1103. The UE 1103 receives the PDSCH 1105 from the repeater 1102, and performs measurement of the measurement signal 1707.

Although Fig. 17 illustrates an example in which the CSI-RS is used as the measurement signal 1707, the SS block may be used. Consequently, for example, in a case in which the UE 1103 is connected to another base station, the UE 1103 can perform measurement of the SS block transmitted via the repeater 1102, and as a result, the UE 1103 can connect to the base station 1101 via the repeater 1102. In the following, description continues with the reference signs of the base station 1101, the repeater 1102, and the UE 1103 being omitted.

The base station may indicate transmission of a measurement signal to the repeater. The indication may be performed using the FL. L1/L2 signaling may be used for the indication, for example. New DCI may be provided. The new DCI may be used for the indication. Consequently, for example, malfunction caused by another UE receiving DCI for the repeater can be prevented. As another example, MAC signaling may be used for the indication. Consequently, for example, a large amount of information can be transmitted from the base station to the repeater. As another example, RRC signaling may be used for the indication. Consequently, for example, a larger amount of information can be transmitted from the base station to the repeater.

The indication may include information for identifying the measurement signal to be measured, for example. The identifier may be an identifier of the CSI-RS, or may be an identifier of the SS block, for example. The indication may include information on resources of the measurement signal to be measured. The information on the resources may include information on a PRB to which the measurement signal is allocated, may include information on a symbol, may include information on an RE, may include information on periodicity, or may include information on an antenna port, for example. The indication may include information on the UE related to the measurement, for example, an identifier of the UE. The indication may include information necessary for generating a code. The repeater may generate a code of the measurement signal, using the information. Consequently, for example, the amount of processing of the base station for generating a code can be reduced.

The same resources may be used for the measurement signal transmitted from the repeater to the UE and the measurement signal transmitted from the base station to the UE. The resources may be time resources, may be frequency resources, may be code resources, or may be a combination of two or more of the above. Consequently, for example, efficiency in the communication system can be enhanced. As another example, different resources may be used between the measurement signal transmitted from the repeater to the UE and the measurement signal transmitted from the base station to the UE. Consequently, for example, the measurement signal transmitted from the repeater to the UE and the measurement signal transmitted from the base station to the UE can be easily identified.

The measurement performed by the repeater may be L1 measurement, for example. A target to be measured in the L1 measurement in the repeater may be RSRP, RSRQ, and/or an SINR of the CSI, may be RSRP, RSRQ, and/or an SINR of the SS block, or may be a combination of two or more of the above, for example. The base station may notify the repeater of information on the target to be measured. The repeater may perform the L1 measurement, using the notification.

The target to be measured may include received signal strength. The notification from the base station to the repeater may include information on the received signal strength. Consequently, for example, the repeater can quickly perform measurement.

The UE may perform CSI feedback on the CSI-RS received from the repeater to the base station. The base station may perform control of the repeater, using the feedback. Consequently, for example, the amount of processing in the repeater can be reduced.

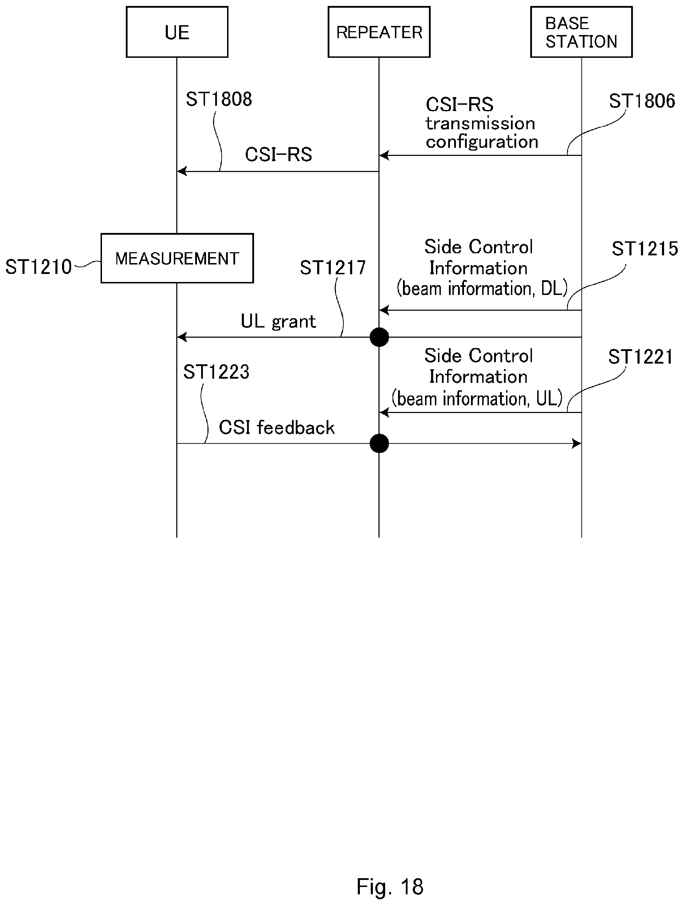

Fig. 18 is a diagram illustrating an example of an operation sequence of L1 measurement in the UE to connect to the base station via the repeater. Fig. 18 illustrates an example in which the CSI-RS is used in L1 measurement. Fig. 18 illustrates an example in which the repeater transmits a CSI-RS and the UE receives the CSI-RS. In Fig. 18, the same processings as those of Fig. 12 are denoted by the same step numbers, and common description will be omitted.

In Step ST1806 illustrated in Fig. 18, the base station indicates a configuration for CSI-RS transmission to the repeater. For the indication, L1/L2 signaling may be used, MAC signaling may be used, RRC signaling may be used, or a combination of two or more of the above may be used, for example. The indication may include information for identifying the measurement signal to be measured, for example. The identifier may be an identifier of the CSI-RS, or may be an identifier of the SS block, for example. The indication may include information on resources of the measurement signal to be measured. The information on the resources may include information on a PRB to which the measurement signal is allocated, may include information on a symbol, may include information on an RE, may include information on periodicity, or may include information on an antenna port, for example. The indication may include information on the UE related to the measurement, for example, an identifier of the UE. The indication may include information necessary for generating a code. The repeater may generate a code of the measurement signal, using the information. Consequently, for example, the amount of processing of the base station for generating a code can be reduced.

In Step ST1808 illustrated in Fig. 18, the repeater transmits the CSI-RS to the UE. For transmission of the CSI-RS from the repeater, the configuration indicated from the base station in Step ST1806 may be used. In Step ST1210, the UE performs measurement of the CSI-RS.

Steps ST1215 to ST1223 illustrated in Fig. 18 are the same as those of Fig. 12.

As another example of the measurement, L3 measurement may be used. The base station may notify the UE of information on a signal to be measured, or may notify the UE of information on a measurement report. The notification may include information on periodicity of the measurement report, or may include information on an event triggering the measurement report. The UE may perform L3 measurement, using the information. The UE may notify the base station of measurement results. For the notification from the UE to the base station, for example, RRC signaling, for example, a measurement report (MeasurementReport), may be used. The base station may determine handover of the UE, using the notified measurement results, for example. Consequently, for example, the UE can perform handover to another base station via the repeater.

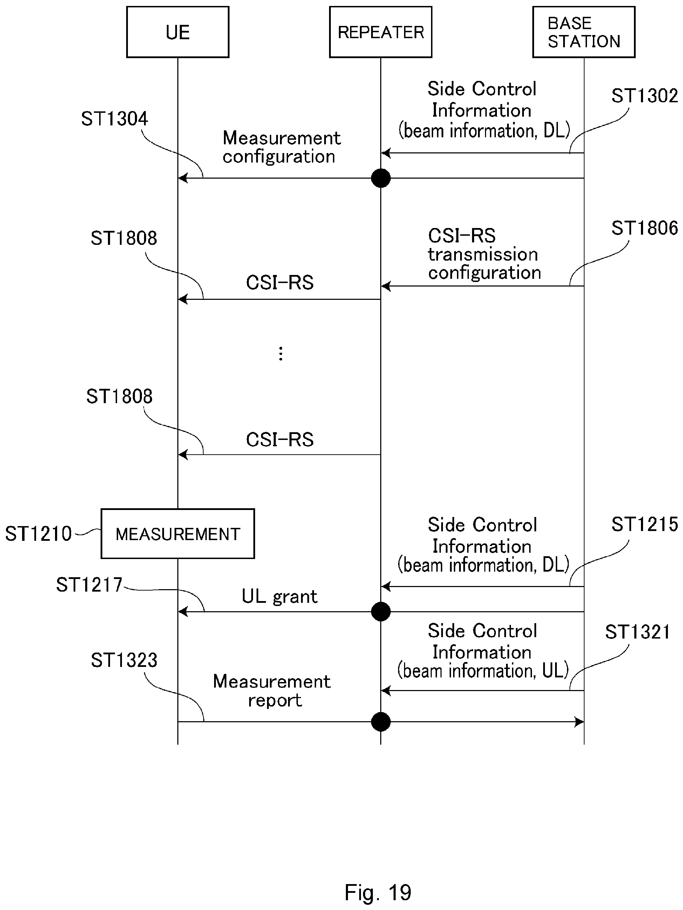

Fig. 19 is a diagram illustrating an example of an operation sequence of L3 measurement in the UE to connect to the base station via the repeater. Fig. 19 illustrates an example in which the CSI-RS is used in L3 measurement. Fig. 19 illustrates an example in which the repeater transmits a CSI-RS and the UE receives the CSI-RS. In Fig. 19, the same processings as those of Fig. 12, Fig. 13, and Fig. 18 are denoted by the same step numbers, and common description will be omitted.

Steps ST1302 and ST1304 illustrated in Fig. 19 are the same as those of Fig. 13. Steps ST1806 and ST1808 are the same as those of Fig. 18. Step ST1210 is the same as that of Fig. 12. In Step ST1210, the UE may perform measurement of a plurality of CSI-RSs.

Steps ST1215 and ST1217 illustrated in Fig. 19 are the same as those of Fig. 12. Steps ST1321 and ST1323 are the same as those of Fig. 13.

The methods disclosed in the first embodiment may be used in combination. For example, a combination of two or more of measurement of the signal transmitted by the base station performed by the UE, measurement of the signal transmitted by the base station performed by the repeater, and measurement of the signal transmitted by the repeater performed by the UE may be used. In the combination described above, one or a plurality of the measurements may be L1 measurement(s), one or a plurality thereof may be L3 measurement(s), or a combination of L1 measurement and L3 measurement may be used in the measurements described above. Consequently, for example, flexibility in the communication system can be enhanced.

The methods disclosed in the first embodiment may be used in a switching manner. For example, transmission of the CSI-RS from the base station and transmission of the CSI-RS from the repeater may be switched. The base station may notify the repeater of information on the switching. The information may be information indicating whether the CSI-RS from the base station is received and is transmitted to the UE, or the repeater itself generates the CSI-RS, for example. Using the information, the repeater may receive the CSI-RS from the base station and transmit the CSI-RS to the UE, or may generate the CSI-RS in the repeater and transmit the CSI-RS to the UE. The same may hold true for the SS block. Consequently, for example, flexibility of the communication system can be enhanced.

As another example, measurement of the CSI-RS in the repeater and measurement of the CSI-RS in the UE may be switched. The base station may notify the repeater of information on the switching. The information may be information indicating whether measurement of the CSI-RS is performed by the UE or is performed by the repeater, for example. Using the information, the repeater may receive the CSI-RS from the base station and transmit the CSI-RS to the UE, or may measure the CSI-RS in the repeater. Consequently, for example, flexibility of the communication system can be enhanced.

According to the first embodiment, measurement in the UE to connect to the base station via the repeater can be performed, and as a result, control of power and the like for communication between the UE to connect to the base station via the repeater and the base station can be smoothly performed.

### Second Embodiment

In measurement of an uplink signal, methods similar to those of the first embodiment may be applied.

For example, the UE to connect to the base station via the repeater may transmit an SRS and the base station may receive the SRS. The repeater may receive the SRS transmitted by the UE and transmit the SRS to the base station. The repeater may amplify the SRS transmitted by the UE and transmit the SRS to the base station. The repeater may perform the amplification operation and/or the transmission operation together with transmission operation of another channel/signal.

The repeater may perform beamforming processing at the time of receiving the SRS from the UE, or may perform beamforming processing at the time of receiving another signal/channel from the UE. The repeater may perform beamforming processing at the time of transmitting the SRS to the base station, or may perform beamforming processing at the time of transmitting another signal/channel to the base station.

The base station may indicate transmission and reception to and from the UE to the repeater. The indication may be performed using the FL, for example. For the indication, L1/L2 signaling may be used, MAC signaling may be used, or RRC signaling may be used, for example. The indication may include the information of (1) to (14) described above. The repeater may receive the SRS from the UE and transmit the SRS to the base station, using the information included in the indication.

The base station may perform control of the UE and/or the repeater, using measurement results of the SRS. For example, the base station may determine uplink transmit power of the UE, may determine uplink transmit power from the repeater, or may determine an amplification rate in the repeater.

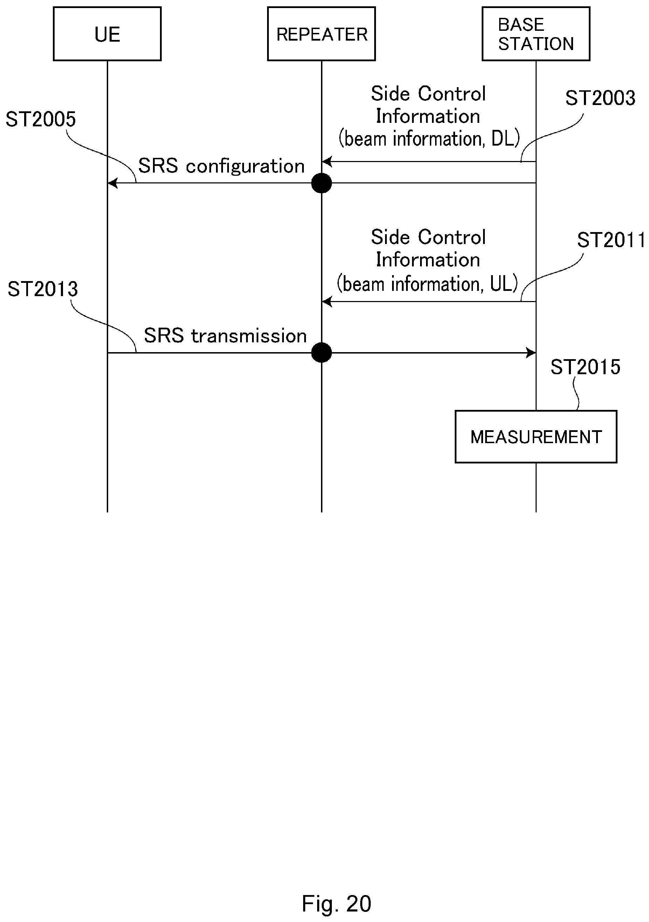

Fig. 20 is a diagram illustrating an example of an operation sequence in which the UE to connect to the base station via the repeater transmits an SRS and the base station receives the SRS. In Fig. 20, arrows with black dots indicate that signal transmission and reception between the base station and the UE are performed via the repeater.

In Step ST2003 illustrated in Fig. 20, the base station indicates a configuration of a beam to the repeater. The indication may include information indicating performing of transmission and reception of a downlink signal. Signaling similar to that of Step ST1205 in Fig. 12 may be used for the indication. In Step ST2005, the base station transmits an SRS configuration for the UE to the repeater, and the repeater receives the configuration from the base station and transmits the configuration to the UE.

In Step ST2011 illustrated in Fig. 20, the base station indicates a configuration of a beam to the repeater. The indication may include information indicating performing of transmission and reception of an uplink signal. Signaling similar to that of Step ST1205 in Fig. 12 may be used for the indication. In Step ST2013, the UE transmits an SRS to the repeater. The repeater receives the SRS and transmits the SRS to the base station. In the SRS transmission in Step ST2013, the SRS configuration notified in Step ST2005 is used. In Step ST2015, the base station measures the SRS transmitted from the UE via the repeater.

The base station may configure transmit power of the SRS for the repeater. The configuration may be performed using the FL, for example. For the configuration, RRC signaling may be used, MAC signaling may be used, or L1/L2 signaling may be used. The repeater receives the SRS from the UE and transmits the SRS to the base station, using the configured power. The repeater may perform transmission to the base station together with another signal/channel, using the configured power. The base station may receive the SRS transmitted from the repeater. Consequently, for example, the base station can recognize the attenuation amount between the repeater and the base station.

As another example, the repeater may measure the SRS. The UE to connect to the base station via the repeater may transmit an SRS, and the repeater may receive the SRS. The repeater may notify the base station of measurement results of the SRS. Consequently, for example, the base station can recognize the radio wave propagation environment between the UE and the repeater, and as a result, can appropriately control the UE and/or the repeater.

The base station may indicate SRS measurement to the repeater. The indication may include information on the SRS measurement. As examples of the information, the following (A) to (I) are disclosed.
(A) Information for identifying the SRS.
(B) Information on whether or not SRS measurement is performed.
(C) Information on a type of the SRS.
(D) Information on the UE.
(E) Information on a beam used in SRS reception.
(F) Information on resources of the SRS.
(G) Information on an item to be measured.
(H) Information on a report of measurement results.
(I) A combination of (A) to (H) described above.

The information of (A) described above may be an identifier of the SRS, for example. Owing to the information of (A) described above, the repeater can determine the SRS that requires measurement, for example.

Regarding the information of (B) described above, the repeater may start SRS measurement with a trigger being reception of information indicating that the SRS measurement is "to be performed", and may stop SRS measurement with a trigger being reception of information indicating that the SRS measurement is "not to be performed". Consequently, for example, the base station can switch whether or not the repeater performs SRS measurement.

The information of (C) described above may include information indicating that SRS transmission from the UE is periodic, may include information indicating that the SRS transmission is semi-persistent, or may include information indicating that the SRS transmission is aperiodic. The repeater may determine whether the SRS measurement is periodic, semi-persistent, or aperiodic, using the information of (C) described above. Consequently, for example, the repeater can perform appropriate measurement, based on an SRS type.

The information of (D) described above may include information on an identifier of the UE, for example. The repeater may determine the UE that transmits the SRS, using the information.

The information of (E) described above may include information on an identifier of the beam used in reception of the SRS, for example. The repeater may recognize the beam used in reception of the SRS, using the information. Consequently, for example, reliability of SRS reception in the repeater can be enhanced.

The information of (F) described above may include information on a subcarrier spacing of the SRS, may include information on a transmission symbol of the SRS, may include information on periodicity of the SRS, may include information on a carrier in which the SRS is transmitted, may include information on a PRB and/or a subcarrier in which the SRS is transmitted, may include information on a code of the SRS, or may include information on transmit power of the SRS, for example. The information of (F) described above may include information included in SRS-config of NPL 19 (3GPP TS 38.331). The repeater may acquire the information on resources of the SRS, using the information. Consequently, for example, the repeater can receive the SRS.

The information of (G) described above may be RSRP, RSRQ, and/or an SINR of the SRS, or may be received strength of SRS reception, for example. It may be a statistical value, for example, a moving average, of the value described above. The repeater may perform measurement of the SRS, using the information. Consequently, for example, inconsistency in recognitions regarding measurements of the SRS between the base station and the repeater can be prevented, and as a result, control of the repeater and/or the UE based on SRS measurement results can be appropriately performed.

The information of (H) described above may include information on signaling used for a report, for example. The signaling may be L1/L2 signaling (for example, the PUCCH), may be MAC signaling, or may be RRC signaling. The information of (H) described above may include information on resources (for example, frequency, time) used for signaling used for the report. The information of (H) described above may include information on periodicity of the report, or may include information on an event triggering the report. The event triggering the report may be similar to the event triggering the measurement report from the UE (see NPL 19 (3GPP TS 38.331)), for example. The information of (H) described above may include information on report contents. The information on the report contents may be similar to the information of (G) described above, for example.

The indication from the base station to the repeater may be performed using the FL. L1/L2 signaling may be used for the indication, for example. New DCI may be provided. The new DCI may be used for the indication. Consequently, for example, malfunction caused by another UE receiving DCI for the repeater can be prevented. As another example, MAC signaling may be used for the indication. Consequently, for example, a large amount of information can be transmitted from the base station to the repeater. As another example, RRC signaling may be used for the indication. Consequently, for example, a larger amount of information can be transmitted from the base station to the repeater. A combination of the signalings described above may be used.

The repeater may report SRS measurement results to the base station. The report may be performed using the FL. L1/L2 signaling may be used for the report, for example. New UCI may be provided. Consequently, for example, the repeater can quickly report the measurement results to the base station. As another example, MAC signaling may be used for the report. Consequently, for example, a large amount of information can be transmitted from the repeater to the base station. As another example, RRC signaling may be used for the report. Consequently, for example, a larger amount of information can be transmitted from the repeater to the base station.

The report from the repeater to the base station may be performed using the information of (H) described above.

The notification of the SRS configuration and/or the information to be included in the SRS measurement results report performed from the base station to the repeater may be related to a plurality of SRSs. For the repeater, the base station may perform a configuration related to a plurality of SRSs, or may perform a configuration of the SRS measurement results report related to a plurality of SRSs. Consequently, for example, the repeater can perform measurement of a plurality of SRSs transmitted from the UE.

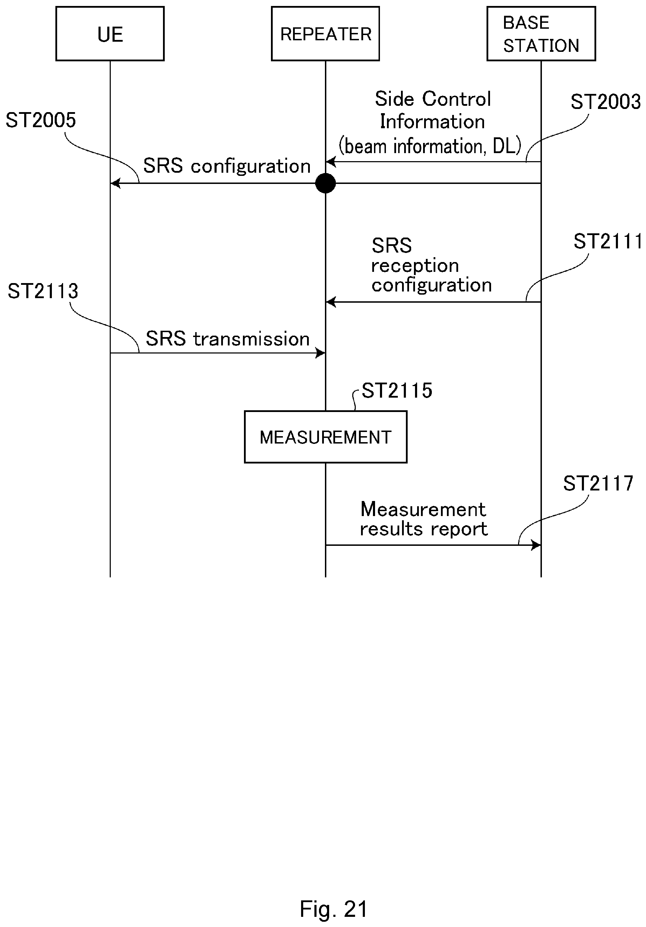

Fig. 21 is a diagram illustrating an example of an operation sequence in which the UE to connect to the base station via the repeater transmits an SRS and the repeater receives the SRS. In Fig. 21, the same processings as those of Fig. 20 are denoted by the same step numbers, and common description will be omitted.

Steps ST2003 and ST2005 illustrated in Fig. 21 are the same as those of Fig. 20.

In Step ST2111 illustrated in Fig. 21, the base station indicates a reception configuration of the SRS to the repeater. The indication may include the information on (A) to (I) described above. In Step ST2111, L1/L2 signaling may be used, MAC signaling may be used, RRC signaling may be used, or a combination of two or more of the above may be used.

In Step ST2113 illustrated in Fig. 21, the UE transmits an SRS to the repeater. In the SRS transmission from the UE, the SRS configuration notified from the base station in Step ST2005 is used. In Step ST2115, the repeater measures the SRS transmitted from the UE. The measurement in Step ST2115 may be performed using the information included in the reception configuration of which indication is received in Step ST2111.

In Step ST2117 illustrated in Fig. 21, the repeater reports SRS measurement results to the base station. The report of Step ST2117 may be performed using the information of (H) described above included in Step ST2111, for example. In Step ST2117, L1/L2 signaling may be used, MAC signaling may be used, or RRC signaling may be used.

As another example, the repeater may transmit an SRS. The repeater itself may generate the SRS and transmit the SRS to the base station. The base station may receive the SRS transmitted by the repeater. Consequently, for example, the base station can recognize the radio wave propagation environment between the repeater and the base station, and as a result, can appropriately control the UE and/or the repeater.

The base station may indicate SRS transmission to the repeater. The SRS transmission indication from the base station to the repeater may be performed using RRC signaling, for example, RRC reconfiguration (RRCReconfiguration). The indication may include information on a configuration of the SRS. The indication may be performed using contents included in SRS-config (see NPL 19), for example.

As another example, for the SRS transmission indication from the base station to the repeater, MAC signaling may be used, or L1/L2 signaling may be used. Consequently, for example, the base station can quickly indicate transmission of an aperiodic SRS to the repeater.

For the SRS transmission indication from the base station to the repeater, a combination of the signalings described above may be used. For example, the base station may perform notification of the configuration of the SRS using RRC signaling, and indicate transmission of the SRS related to the configuration using L1/L2 signaling. Consequently, for example, a large amount of information can be notified from the base station to the repeater, and a quick indication can be performed.

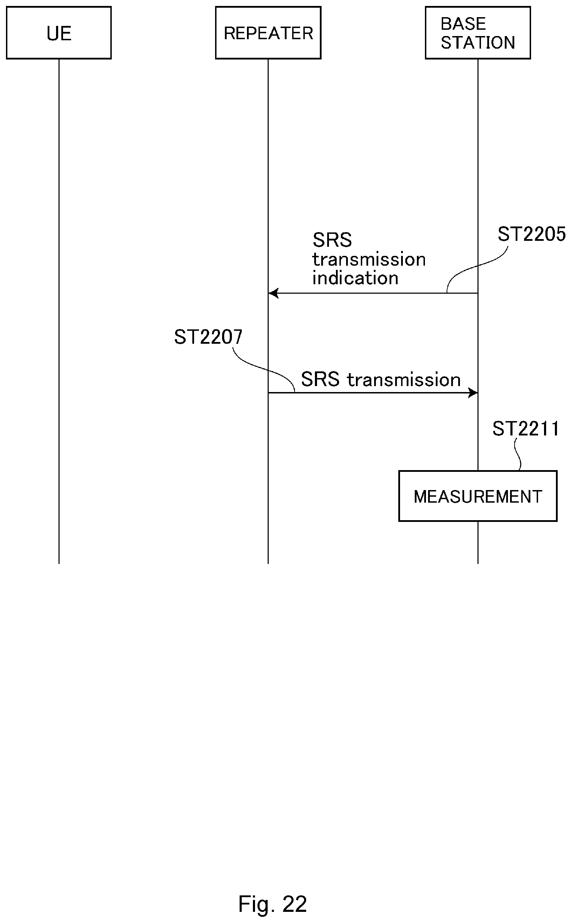

Fig. 22 is a diagram illustrating an example of an operation sequence in which the repeater transmits an SRS and the base station receives the SRS.

In Step ST2205 illustrated in Fig. 22, the base station indicates transmission of an SRS to the repeater. The indication may include information on a configuration of the SRS. The indication may be performed using RRC signaling, for example, RRC reconfiguration (RRCReconfiguration), may be performed using MAC signaling, may be performed using L1/L2 signaling, or may be performed using a combination of the signalings described above.

In Step ST2207 illustrated in Fig. 22, the repeater transmits an SRS to the base station. In the SRS transmission from the repeater to the base station, the information included in the indication received in Step ST2205 may be used. In Step ST2211, the base station measures the SRS transmitted from the repeater.

The methods disclosed in the second embodiment may be used in combination. For example, a combination of SRS transmission from the UE to the base station, SRS transmission from the UE to the repeater, and SRS transmission from the repeater to the base station may be used. Consequently, for example, the base station can recognize the radio wave propagation environment between the repeater and the base station, and as a result, can appropriately control the UE and/or the repeater.

The base station and the repeater may measure the same SRS. The repeater may measure the SRS transmitted by the UE, and transmit the SRS to the base station. Consequently, for example, resources of the SRS in the communication system can be saved. As another example, the base station and the repeater may measure different SRSs. The UE may transmit each of the SRS used for measurement in the base station and the SRS used for measurement in the repeater. Consequently, for example, complexity in the communication system can be avoided.

The methods disclosed in the second embodiment may be used in a switching manner. For example, transmission of the SRS from the UE and generation and transmission of the SRS from the repeater may be switched. The base station may notify the repeater of information on the switching. The information may be information indicating whether the UE transmits the SRS or the repeater itself generates the SRS, for example. Using the information, the repeater may receive the SRS from the UE and transmit the SRS to the base station, or may generate the SRS in the repeater and transmit the SRS to the base station. Consequently, for example, flexibility of the communication system can be enhanced.

As another example, measurement of the SRS in the repeater and measurement of the SRS in the base station may be switched. The base station may notify the repeater of information on the switching. The information may be information indicating whether measurement of the SRS is performed by the base station or is performed by the repeater, for example. Using the information, the repeater may receive the SRS from the UE and transmit the SRS to the base station, or may measure the SRS in the repeater. Consequently, for example, flexibility of the communication system can be enhanced.

According to the second embodiment, SRS transmission from the UE to connect to the base station via the repeater can be performed, and as a result, the base station can appropriately perform control of the UE to connect to the base station via the repeater and the repeater.

In the present disclosure, although the repeater (smart repeater) is described, a reflector or a reconfigurable intelligent surface (RIS) may be used, unless otherwise specifically noted. Consequently, for example, power consumption in the communication system can be reduced, and coverage of the base station can be enhanced.

In the present disclosure, although there is a description of the gNB or the cell, it may be the gNB or may be the cell, unless otherwise specifically noted.

The embodiments and their alterations described above are merely illustrative, and the embodiments and their alterations can be freely combined. Any component in the embodiments and their alterations can be modified or omitted as appropriate.

For example, in the embodiments and their alterations described above, a subframe is an example of a time unit of communication in the fifth generation communication system. The subframe may be a scheduling unit. In the embodiments and their alterations described above, processing described to be performed in a subframe unit may be performed in a TTI unit, a slot unit, a sub-slot unit, or a mini-slot unit.

For example, the methods disclosed in the embodiments and their alterations described above may be applied not only to a vehicle-to-everything (V2X) service but also to services using SL communication. For example, they may be applied to SL communication used in various services, such as a proximity-based service, public safety, inter-wearable terminal communication, and inter-device communication in a factory.

### Reference Signs List

- 202: Communication terminal apparatus (mobile terminal),
- 210: Communication system,
- 213, 240-1, 240-2, 750, 801: Base station apparatus (NR base station, base station),
- 214: 5G core unit,
- 215: Central unit,
- 216: Distributed unit,
- 217: Control-plane central unit,
- 218: User-plane central unit,
- 219: TRP,
- 301, 403: Protocol processing unit,
- 302: Application unit,
- 304, 405: Encoder unit,
- 305, 406: Modulating unit,
- 306, 407: Frequency converting unit,
- 307-1 to 307-4, 408-1 to 408-4: Antenna,
- 308, 409: Demodulating unit,
- 309, 410: Decoder unit,
- 310, 411, 526: Control unit,
- 401: EPC communication unit,
- 402: Other base station communication unit,
- 412: 5GC communication unit,
- 521: Data network communication unit,
- 522: Base station communication unit,
- 523: User plane communication unit,
- 523-1: PDU processing unit,
- 523-2: Mobility anchoring unit,
- 525: Control plane control unit,
- 525-1: NAS security unit,
- 525-2: Idle state mobility management unit,
- 527: Session management unit,
- 527-1: PDU session control unit,
- 527-2: UE IP address assigning unit,
- 751-1 to 751-8: Beam,
- 752: Cell,
- 803: Coverage,
- 805, 806, 811, 812, 905, 906: UE,
- 807, 808: UL/DL communication,
- 810, 814: SL communication,
- 901: IAB donor CU,
- 902: IAB donor DU,
- 903, 904: IAB node.

## Claims

1. A communication system comprising:
a base station applied to a fifth generation radio access system; and
a repeater having a beamforming function and being configured to perform relay processing between the base station and a communication terminal, wherein
the base station is configured to transmit, to the repeater, information on a beam to be used in the relay processing, and transmit, to the repeater, a reference signal to be used for measurement for mobility control of the communication terminal, and
the repeater is configured to, after receiving the reference signal, form the beam based on the information on the beam received from the base station and transmit the reference signal to the communication terminal, receive measurement results of the reference signal from the communication terminal, and relay the measurement results to the base station.

2. The communication system according to claim 1, wherein
the repeater is configured to further measure the reference signal received from the base station, and transmit measurement results to the base station.

3. A communication system comprising:
a base station applied to a fifth generation radio access system; and
a repeater having a beamforming function and being configured to perform relay processing between the base station and a communication terminal, wherein
the base station is configured to transmit, to the repeater, information on a beam to be used in the relay processing, and transmit, to the repeater, information on a reference signal to be used for measurement for mobility control of the communication terminal, and
the repeater is configured to form the beam based on the information on the beam received from the base station, generate the reference signal based on the information on the reference signal, transmit the reference signal to the communication terminal, receive measurement results of the reference signal from the communication terminal, and relay the measurement results to the base station.

4. A communication system comprising:
a base station applied to a fifth generation radio access system; and
a repeater having a beamforming function and being configured to perform relay processing between the base station and a communication terminal, wherein
the base station is configured to transmit, to the repeater, information on a beam to be used in the relay processing, and transmit information on a reference signal to be used for measurement for mobility control of the communication terminal to the communication terminal via the repeater,
the communication terminal is configured to generate the reference signal based on the information on the reference signal and transmit the reference signal, and
the repeater is configured to, after receiving the reference signal from the communication terminal, form the beam based on the information on the beam received from the base station, and transmit the reference signal to the base station.

5. A communication system comprising:
a base station applied to a fifth generation radio access system; and
a repeater having a beamforming function and being configured to perform relay processing between the base station and a communication terminal, wherein
the base station is configured to transmit, to the repeater, information on a beam to be used in the relay processing, and transmit information on a reference signal to be used for measurement for mobility control of the communication terminal to the communication terminal via the repeater,
the communication terminal is configured to generate the reference signal based on the information on the reference signal and transmit the reference signal, and
the repeater is configured to measure the reference signal transmitted by the communication terminal, form the beam based on the information on the beam received from the base station, and transmit measurement results of the reference signal to the base station.

6. The communication system according to claim 5, wherein
the repeater is configured to further generate the reference signal based on the information on the reference signal, and transmit the reference signal to the base station.
